# EUROPEAN PATENT APPLICATION

(11) **EP 3 664 433 A1**
(43) Date of publication of application: **10.06.2020**
(21) Application number: 18863036.2
(22) Date of filing: 13.09.2018
(51) Int. Cl.: H04N 5/232, G03B 7/091, G03B 7/20, G03B 19/07, H04N 5/225

(54) **INFORMATION PROCESSING DEVICE, INFORMATION PROCESSING METHOD, AND PROGRAM, AND INTERCHANGEABLE LENS**

(30) Priority: 27.09.2017 JP 2017186334
(71) Applicant: Sony Corporation, Tokyo 108-0075 (JP)
(72) Inventor: HAYASAKA, Kengo, Tokyo 108-0075 (JP); ITO, Katsuhisa, Tokyo 108-0075 (JP); NAKAMURA, Makibi, Tokyo 108-0075 (JP)
(74) Representative: D Young & Co LLP
(86) International application number: PCT/JP2018/033917
(87) International publication number: WO 2019/065260

(57) **Abstract**

The present technology relates to an information processing apparatus, an information processing method, a program, and an interchangeable lens that make it possible to easily obtain images of a plurality of viewpoints.

A communication section receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction. A region specification section specifies the regions of the plurality of facet images respectively corresponding to the plurality of facet lenses in the captured image, on the basis of the region specification information. The present technology is applicable to a camera system or the like that captures images, for example.

## Description

### Technical Field

The present technology relates to an information processing apparatus, an information processing method, a program, and an interchangeable lens. In particular, the present technology relates to an information processing apparatus, an information processing method, a program, and an interchangeable lens that make it possible to easily obtain images of a plurality of viewpoints, for example.

### Background Art

There has been proposed a light field technique that reconstitutes, from images of a plurality of viewpoints, a refocused image, that is, an image or the like captured by changing a focus of an optical system, for example (see NPL 1, for example).

For example, NPL 1 describes a refocusing method that uses a camera array including 100 cameras.

### Citation List

### Non-Patent Literature

NPL 1: Bennett Wilburn et al. "High Performance Imaging Using Large Camera Arrays"

### Summary of the Invention

### Problems to be Solved by the Invention

Images of a plurality of viewpoints are necessary for performing specific image processing such as the refocusing.

The present technology has been made in view of the above described situations. The present technology makes it possible to easily obtain the images of the plurality of viewpoints.

### Means for Solving the Problem

An information processing apparatus or a program according to the present technology is an information processing apparatus including: a communication section that receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and a region specification section that specifies the regions of the plurality of facet images respectively corresponding to the plurality of facet lenses in the captured image, on the basis of the region specification information, or a program that causes a computer to function as such an information processing apparatus.

An information processing method according to the present technology is an information processing method performed by the information processing apparatus, the method including: receiving region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and specifying the regions of the plurality of facet images respectively corresponding to the plurality of facet lenses in the captured image, on the basis of the region specification information.

The information processing apparatus, the information processing method, and the program according to the present technology receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction. Next, the regions of the plurality of facet images respectively corresponding to the plurality of facet lenses in the captured image is specified on the basis of the region specification information.

An interchangeable lens according to the present technology is an interchangeable lens including: a plurality of facet lenses disposed in a manner that the plurality of facet lenses does not overlap each other in an optical axis direction; a storage that stores region specification information for specifying respective regions of a plurality of facet images corresponding to pictures formed of respective light beams collected through the plurality of facet lenses, the respective regions being included in an image captured by one image sensor in a case where the interchangeable lens is mounted on a camera body including the image sensor; and a communication section that transmits the region specification information to an outside.

The interchangeable lens according to the present technology includes a plurality of facet lenses disposed in a manner that the plurality of facet lenses does not overlap each other in an optical axis direction, and stores region specification information for specifying respective regions of a plurality of facet images corresponding to pictures formed of respective light beams collected through the plurality of facet lenses, the respective regions being included in an image captured by one image sensor in a case where the interchangeable lens is mounted on a camera body including the image sensor. The region specification information is transmitted to an outside.

It is to be noted that the information processing apparatus may be an independent apparatus or may be an internal block included in an apparatus.

In addition, it is possible to provide the program by transmitting the program through a transmission medium or by recording the program on a recording medium.

### Advantageous Effect of the Invention

According to the present technology, it possible to easily obtain images of a plurality of viewpoints.

It is to be noted that the effects described here are not necessarily limited, and may be any of the effects described in the present disclosure.

### Brief Description of the Drawings

[FIG. 1] FIG. 1 is a perspective view illustrating a configuration example of an embodiment of a camera system to which the present technology is applied.
[FIG. 2] FIG. 2 is a rear view illustrating a configuration example of a rear surface of a camera body 10.
[FIG. 3] FIG. 3 is a block diagram illustrating an electrical configuration example of the camera system.
[FIG. 4] FIG. 4 is a diagram for describing an overview of image capturing by using a multi-eye interchangeable lens 20.
[FIG. 5] FIG. 5 is a diagram illustrating an example of arrangement of facet lenses 311 to 314 in the multi-eye interchangeable lens 20 and an example of an image captured by using the multi-eye interchangeable lens 20.
[FIG. 6] FIG. 6 is a flowchart for describing an example of a region specification process performed by a region specification section 52 to specify respective regions of facet images E#i in the captured image.
[FIG. 7] FIG. 7 illustrates a display example of through images displayed on a display 54.
[FIG. 8] FIG. 8 is a cross-sectional view illustrating an overview of a first optical configuration example of the multi-eye interchangeable lens 20.
[FIG. 9] FIG. 9 is a cross-sectional view illustrating an overview of a second optical configuration example of the multi-eye interchangeable lens 20.
[FIG. 10] FIG. 10 is a rear view illustrating an overview of configuration examples of diaphragms 71 in a case where the multi-eye interchangeable lens 20 includes the four facet lenses 31₁ to 31₄.
[FIG. 11] FIG. 11 is a perspective view illustrating a configuration example of the multi-eye interchangeable lens 20 including the diaphragm 71.
[FIG. 12] FIG. 12 is a flowchart for describing an example of a process of exposure control (an exposure control process) performed by a controller 56.
[FIG. 13] FIG. 13 is a block diagram illustrating a functional configuration example of sections that perform refocusing in an image processor 53.
[FIG. 14] FIG. 14 is a flowchart for describing an example of image processing performed by the image processor 53.
[FIG. 15] FIG. 15 is a rear view illustrating another configuration example of the multi-eye interchangeable lens 20.
[FIG. 16] FIG. 16 is a diagram for describing an example in which an interpolator 82 generates an interpolation image.
[FIG. 17] FIG. 17 is a diagram for describing an example in which a parallax information generator 81 generates a disparity map.
[FIG. 18] FIG. 18 is a diagram for describing an overview of refocusing achieved through a light collection process performed by a light collection processor 83.
[FIG. 19] FIG. 19 is a diagram for describing an example of disparity conversion.
[FIG. 20] FIG. 20 is a flowchart for describing an example of the light collection process for the refocusing.
[FIG. 21] FIG. 21 is a diagram for describing an example of a process of acquiring, by using a server, region information that indicates a region of a facet image.
[FIG. 22] FIG. 22 is a diagram for describing details of the exposure control.
[FIG. 23] FIG. 23 illustrates a configuration example of a camera system including an AE function.
[FIG. 24] FIG. 24 is a block diagram illustrating a configuration example of an embodiment of a computer to which the present disclosure is applied.

### Modes for Carrying Out the Invention

### <Embodiment of Camera System to which Present Technology is Applied>

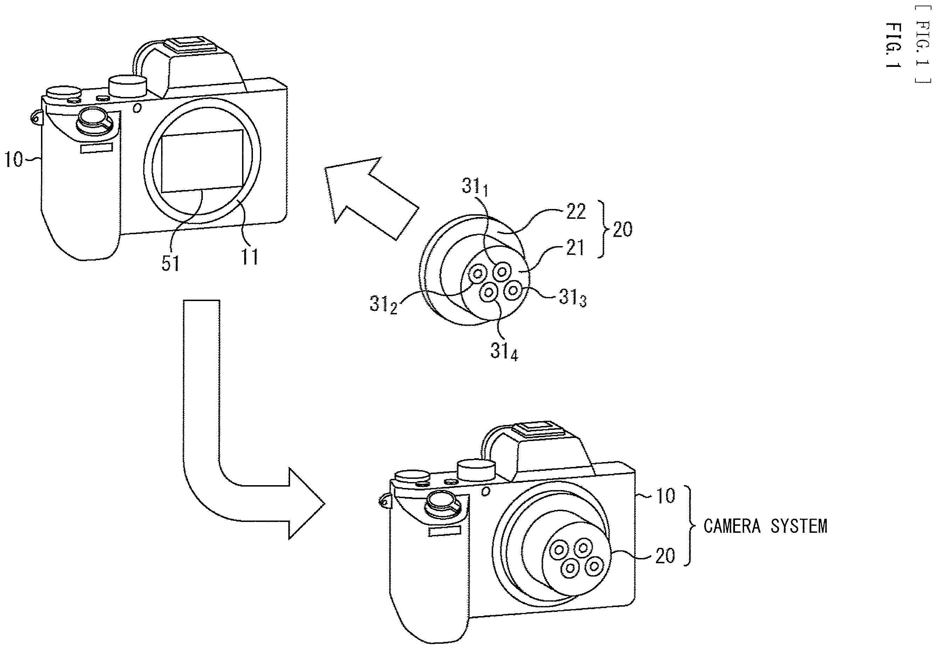

FIG. 1 is a perspective view illustrating a configuration example of an embodiment of a camera system to which the present technology is applied.

The camera system includes a camera body 10 and a multi-eye interchangeable lens 20.

The multi-eye interchangeable lens 20 is attachable and detachable to and from the camera body 10. In other words, the camera body 10 includes a camera mount 11. The multi-eye interchangeable lens 20 is mounted on the camera body 10 by attaching (a lens mount 22 of) the multi-eye interchangeable lens 20 to the camera mount 11. It is to be noted that a general interchangeable lens other than the multi-eye interchangeable lens 20 is also attachable and detachable to and from the camera body 10.

The camera body 10 includes an image sensor 51 incorporated therein. The image sensor 51 is a complementary metal-oxide-semiconductor (CMOS) image sensor, for example. The image sensor 51 captures an image by receiving light beams collected through the multi-eye interchangeable lens 20 or another interchangeable lens mounted on (the camera mount 11 of) the camera body 10 and carrying out photoelectric conversion. Hereinafter, the image captured by the image sensor 51 is also referred to as a captured image.

The multi-eye interchangeable lens 20 includes a lens barrel 21 and a lens mount 22.

A plurality of lenses, which are four facet lenses 311, 312, 313, and 314 are disposed in the lens barrel 21 in a manner that the four facet lenses do not overlap each other in an optical axis direction (when viewed from the optical axis direction). In FIG. 1, the four facet lenses 31₁ to 31₄ are disposed at positions of vertices of a rhombus on a two-dimensional plane (parallel to a light receiving surface (an imaging surface) of the image sensor 51) that is perpendicular to the optical axis in the lens barrel 21.

The facet lenses 311 to 314 collect light beams from a subject on the image sensor 51 of the camera body 10 when the multi-eye interchangeable lens 20 is mounted on the camera body 10.

It is to be noted that, here, the camera body 10 is a so-called single-chip camera including one image sensor 51. However, as the camera body 10, it is also possible to use a so-called three-chip camera including a plurality of image sensors, that is, three image sensors for red, green, and blue (RGB), for example. As regards the three-ship camera, the facet lenses 31₁ to 31₄ collect light beams on each of the three image sensors.

When the multi-eye interchangeable lens 20 is mounted on the camera body 10, the lens mount 22 is attached to the camera mount 11 of the camera body 10.

It is to be noted that, in FIG. 1, the multi-eye interchangeable lens 20 is equipped with the four facet lenses 311 to 314. However, the number of facet lenses included in the multi-eye interchangeable lens 20 is not limited to four. Any number of facet lenses, such as two, three, five, or more facet lenses may be adopted as long as the number of facet lenses is two or more.

In addition, the plurality facet lenses included in the multi-eye interchangeable lens 20 are disposed at positions of vertices of the rhombus. However, it is also possible to dispose the facet lenses at any position on a two-dimensional plane.

In addition, as the plurality of facet lenses included in the multi-eye interchangeable lens 20, it is possible to adopt a plurality of lenses having focal lengths, f-numbers, and other specifications that are different from each other. However, for ease of explanation, a plurality of lenses with the same specifications are adopted here.

In the multi-eye interchangeable lens 20, the four facet lenses 31₁ to 31₄ are disposed in a manner that optical axes of the respective facet lenses 31₁ to 31₄ are perpendicular to a light receiving surface of the image sensor 51 when the multi-eye interchangeable lens 20 is mounted on the camera body 10.

In the camera system in which the multi-eye interchangeable lens 20 is mounted on the camera body 10, the image sensor 51 captures images corresponding to pictures formed on the light receiving surface of the image sensor 51 by using respective light beams collected through the four facet lenses 31₁ to 31₄.

Here, if an image corresponding to a picture formed by a light beam collected through one facet lens 31ᵢ (i = 1, 2, 3, or 4 in this case) is referred to as a facet image, images captured by the one image sensor 51 include four facet images respectively corresponding to the four facet lenses 31₁ to 31₄ (images corresponding to pictures formed by light beams collected through the respective facet lenses 311 to 31₄).

The facet image corresponding to the facet lens 31ᵢ is an image captured by using the position of the facet lens 31ᵢ as a viewpoint. Therefore, the four facet images corresponding to the respective facet lenses 311 to 314 are images captured from different viewpoints.

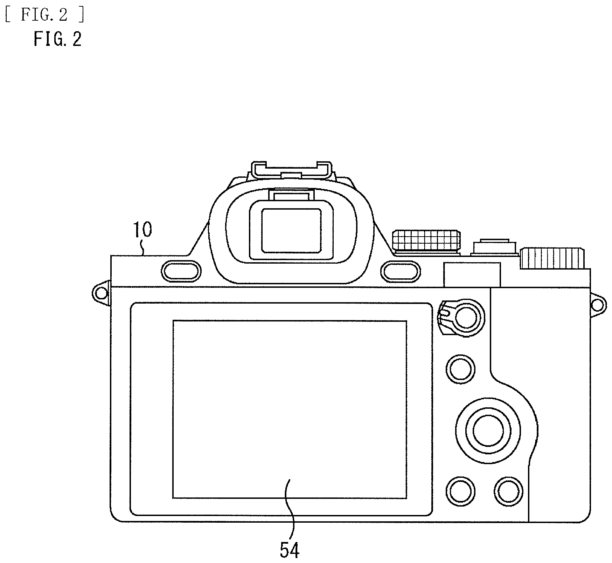

FIG. 2 is a rear view illustrating a configuration example of a rear surface of the camera body 10.

Here, a surface on which the multi-eye interchangeable lens 20 is mounted, that is, a surface with the camera mount 11 is regarded as a front surface of the camera body 10.

The rear surface of the camera body 10 is equipped with a display 54 implemented by a liquid crystal panel, an organic electro-luminescence (EL) panel, or the like, for example. The display 54 displays information such as a so-called through image, a menu, or settings for the camera body 10.

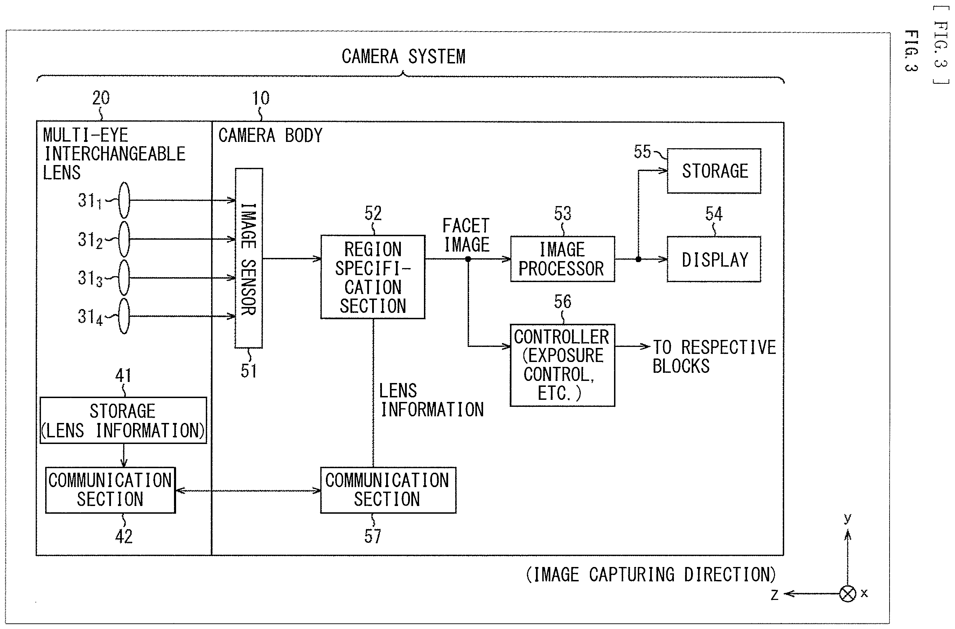

FIG. 3 is a block diagram illustrating an electrical configuration example of the camera system illustrated in FIG. 1.

In the camera system, the multi-eye interchangeable lens 20 includes a storage 41 and a communication section 42.

The storage 41 stores lens information that is information regarding the multi-eye interchangeable lens 20. The lens information includes region specification information for specifying respective regions of facet images corresponding to the respective facet lenses 31₁ to 31₄, the respective regions being included in an image captured by the (one) image sensor 51 in a case where the multi-eye interchangeable lens 20 is mounted on the camera body 10.

As the region specification information, it is possible to adopt region information indicating regions of the respective facet images included in the captured image. The region information is, for example, information indicating sizes and positions of the facet images included in the captured image, such as coordinates of upper left points (pixels) and lower right points of the facet images included in the captured image, coordinates of predetermined points like the upper left points of the facet images included in the captured image, or sizes (for example, horizontal and vertical sizes) of the facet images.

In addition, as the region specification information, it is also possible to adopt information (hereinafter, referred to as non-region information) that makes it possible to specify the regions of the respective facet images in the captured image, in addition to the region information. The non-region information includes, for example, diameters of respective effective image circles of the facet lenses 31₁ to 31₄, center positions of the effective image circles, and the like. In addition, for example, it is possible to adopt a lens ID of the multi-eye interchangeable lens 20 as the non-region information in a case where the unique lens identification (ID) is allocated to the multi-eye interchangeable lens 20 and a database in which lens IDs are associated with pieces of region information regarding multi-eye interchangeable lenses 20 specified on the basis of the lens IDs is prepared. In this case, it is possible to acquire a piece of the region information regarding the multi-eye interchangeable lens 20 associated with the lens ID by searching the database by using the lens ID as a keyword.

The communication section 42 communicate with a communication section 57 to be described later of the camera body 10, in a wired or wireless manner. It is to be noted that the communication section 42 additionally makes it possible to communicate with another external device such as a server on the Internet or a personal computer (PC) on a wired or wireless local area network (LAN) by using any communication scheme as necessary.

For example, when the multi-eye interchangeable lens 20 is mounted on the camera body 10, the communication section 42 communicates with the communication section 57 of the camera body 10, and transmits the lens information stored in the storage 41 to the communication section 57.

The camera body 10 includes the image sensor 51, a region specification section 52, an image processor 53, the display 54, a storage 55, a controller 56, and the communication section 57.

For example, as described with reference to FIG. 1, the image sensor 51 is a CMOS image sensor. The light receiving surface of the image sensor 51 is irradiated with light beams collected through the respective facet lenses 31₁ to 31₄ of the multi-eye interchangeable lens 20 mounted on the camera body 10.

The image sensor 51 receives the light beams collected through the respective facet lenses 31₁ to 31₄ and carries out the photoelectric conversion. This makes it possible to capture an image including facet images corresponding to the respective facet lenses 31₁ to 31₄ (facet images corresponding to pictures formed by the light beams collected through the respective facet lenses 31₁ to 31₄), and supply the captured image to the region specification section 52.

The region specification section 52 is supplied with the captured image from the image sensor 51, and supplied with the lens information from the communication section 57. The lens information has been received by the communication section 57 from the multi-eye interchangeable lens 20.

On the basis of the region specification information included in the lens information supplied from the communication section 57, the region specification section 52 specifies the regions of the facet images corresponding to the respective facet lenses 31₁ to 31₄, the regions being included in the captured image supplied from the image sensor 51, and outputs region specification result information indicating results of the region specification.

Here, the region specification section 52 makes it possible to output, for example, a set of the captured image and the region information indicating the regions of the respective facet images included in the captured image, as the region specification result information. In addition, the region specification section 52 makes it possible to extract (cut out) the respective facet images from the captured image, and output the respective facet images as the region specification result information.

Hereinafter, for ease of explanation, it is assumed that, for example, the region specification section 52 outputs the respective facet images (here, the respective facet images corresponding to the facet lenses 311 to 314) extracted from the captured image, as the region specification result information.

The facet images corresponding to the respective facet lenses 31₁ to 31₄ outputted from the region specification section 52 are supplied to the image processor 53 and the controller 56.

The image processor 53 uses the facet images corresponding to the respective facet lenses 31₁ to 31₄ supplied from the region specification section 52, that is, facet images captured by using the positions of the respective facet lenses 311 to 314 as different viewpoints, performs image processing such as refocusing for generating (reconstituting) an image that focuses on, for example, any subject, and supplies the display 54 and the storage 55 with a process result image obtained as a result of the image processing.

As described with reference to FIG. 2, the display 54 displays, for example, the process result image or the like supplied from the image processor 53 as the through image.

The storage 55 is implemented by a memory card (not illustrated) or the like. The storage 55 stores the process result image supplied from the image processor 53 in response to user operation or the like, for example.

The controller 56 performs various kinds of control over the camera body 10 and the multi-eye interchangeable lens 20 mounted on the camera body 10. For example, the controller 56 controls exposure and focus by using the facet images supplied from the region specification section 52, and achieves auto exposure (AE) and autofocus (AF).

The communication section 57 communicates with the communication section 42 or the like of the multi-eye interchangeable lens 20 in a wired/wireless manner. It is to be noted that the communication section 57 additionally makes it possible to communicate with another external device such as the server on the Internet or the PC on the wired or wireless LAN by using any communication scheme as necessary.

For example, when the multi-eye interchangeable lens 20 is mounted on the camera body 10, the communication section 57 communicates with the communication section 42 of the multi-eye interchangeable lens 20, receives the lens information regarding the multi-eye interchangeable lens 20 transmitted from the communication section 42, and supplies the lens information to the region specification section 52.

### <Overview of Image Capturing using Multi-Eye Interchangeable Lens 20>

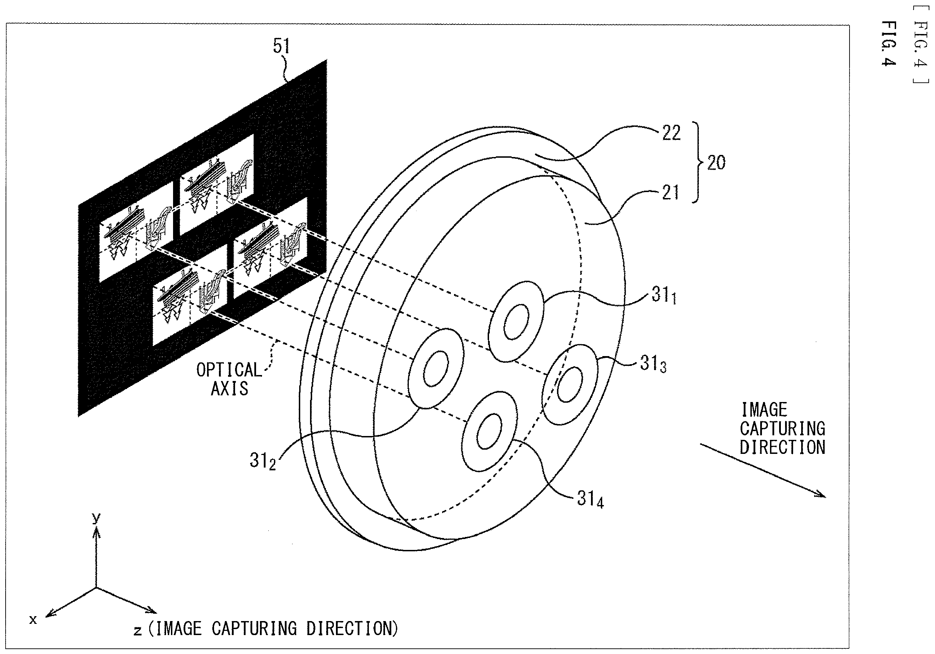

FIG. 4 is a diagram for describing an overview of image capturing using the multi-eye interchangeable lens 20.

The image sensor 51 of the camera body 10 equipped with the multi-eye interchangeable lens 20 captures an image including facet images corresponding to pictures formed of light beams collected through the respective facet lenses 31ᵢ.

Here, in this specification, among optical axis directions of the facet lenses 31ᵢ, a direction from the rear surface side to the front surface side of the camera body 10 is referred to as a z direction (axis), and a direction from left to right obtained when the camera body 10 is facing the z direction is referred to as an x direction, and a direction from bottom to top is referred to as a y direction.

In addition, the left side and the right side of a subject shown in an image are conformed to the left side and the right side of the subject in a real space, and the left sides and the right sides of the facet lenses 31ᵢ are conformed to the left sides and the right sides of the facet images corresponding to the facet lenses 31ᵢ in the captured image. Therefore, hereinafter, positions on the captured image, positions of the facet lenses 31ᵢ, and the left side and the right side of the subject or the like are described on the basis of a state of facing the z direction, that is, an image capturing direction from the rear surface side of the camera body 10 to the subject to be captured an image of, unless otherwise specified.

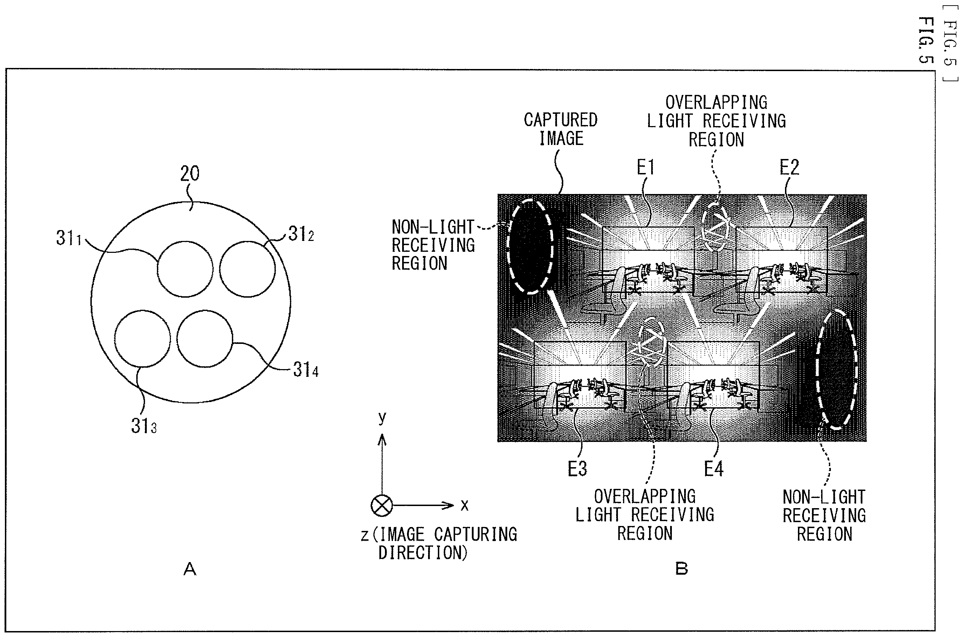

FIG. 5 is a diagram illustrating an example of arrangement of the facet lenses 31₁ to 31₄ in the multi-eye interchangeable lens 20 and an image captured by using the multi-eye interchangeable lens 20.

FIG. 5A is a rear view illustrating the example of arrangement of the facet lenses 31₁ to 31₄ in the multi-eye interchangeable lens 20.

As described with reference to FIG. 1, the facet lenses 31₁ to 31₄ are disposed at positions of vertices of the rhombus on the two-dimensional plane parallel to the light receiving surface of the image sensor 51.

For example, on the basis of the facet lens 31₁ among the facet lenses 31₁ to 31₄, the facet lens 31₂ is disposed on the right side of the facet lens 31₁, in FIG. 5. In addition, the facet lens 31₃ is disposed on the lower left side of the facet lens 31₁, and the facet lens 31₄ is disposed on the lower right side of the facet lens 31₁.

FIG. 5B illustrates an example of an image captured by the image sensor 51 of the camera body 10 equipped with the multi-eye interchangeable lens 20 in which the facet lenses 31₁ to 31₄ are disposed as illustrated in FIG. 5A.

The image captured by the image sensor 51 of the camera body 10 equipped with the multi-eye interchangeable lens 20 including the plurality of facet lenses 31₁ to 31₄ includes, in addition to a region irradiated with only a light beam passed through a certain facet lens 31ᵢ, an overlapping light receiving region and a non-light receiving region.

The overlapping light receiving region is a region in the captured image irradiated with both a light beam passed through a certain facet lens 31ᵢ and a light beam passed through another facet lens 31ⱼ. The non-light receiving region is a region in the captured image that is not irradiated with any light beams passed through the respective facet lenses 311 to 314.

The region specification section 52 (FIG. 3) specifies, as a region of a facet image E#i corresponding to a facet lens 31ᵢ, on the basis of the region specification information included in the lens information, a rectangular region of a predetermined size that is centered on (a position corresponding to) an optical axis of the facet lens 31ᵢ among regions corresponding to the facet lenses 31ᵢ in the captured image irradiated with only the light beams passed through the respective facet lenses 31i.

This makes it possible for the facet image E#i corresponding to the facet lens 31ᵢ to be an image that only includes, within a picture formed of a light beam collected through the facet lens 31ᵢ, only a portion that does not overlap other picture formed of a light beam collected through another facet lens 31ⱼ.

In addition, the facet image E#i corresponding to the facet lens 31ᵢ is an image captured by using the position of the facet lens 31ᵢ as a viewpoint in a way similar to an image captured from the position of the facet lens 31ᵢ by using an independent camera.

### < Region Specification Process of Facet image>

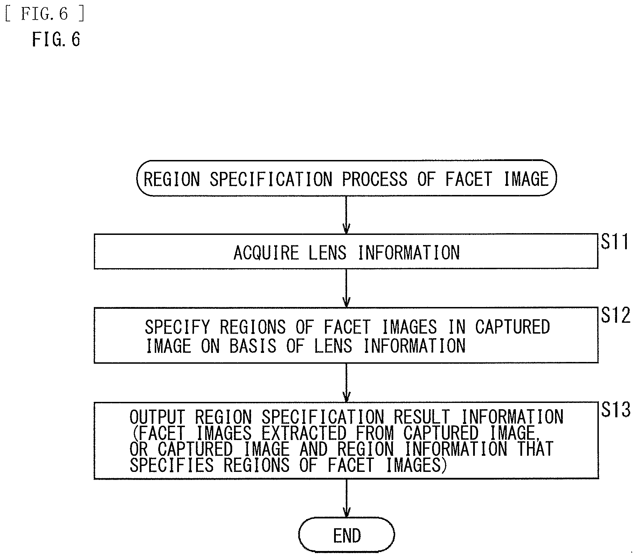

FIG. 6 is a flowchart for describing an example of a region specification process performed by the region specification section 52 illustrated in FIG. 3 to specify respective regions of facet images E#i in the captured image.

In Step S11, the region specification section 52 acquires the lens information supplied from the communication section 57, and the process proceeds to Step S12.

In other words, when the multi-eye interchangeable lens 20 is mounted on the camera body 10, the communication section 57 communicates with the communication section 42 of the multi-eye interchangeable lens 20, receives the lens information regarding the multi-eye interchangeable lens 20 transmitted from the communication section 42, and supplies the lens information to the region specification section 52. As described above, the region specification section 52 acquires the lens information supplied from the communication section 57.

In Step S12, the region specification section 52 specifies respective regions of facet images E1, E2, E3, and E4 corresponding to the facet lenses 31₁ to 31₄ in the captured image supplied from the image sensor 51, on the basis of the region specification information included in the lens information acquired from the communication section 57, and the process proceeds to Step S13.

In Step S13, the region specification section 52 extracts the facet images E1 to E4 from the captured image, outputs the facet images E1 to E4 as the region specification result information, and ends the process.

It is to be noted that, as described with reference to FIG. 3, the region specification section 52 makes it possible to output a set of the captured image and the region information indicating the regions of the respective facet images E#i in the captured image as the region specification result information, instead of the facet images E1 to E4.

As described above, the multi-eye interchangeable lens 20 includes the facet lenses 31₁ to 31₄ disposed in a manner that the facet lenses 31₁ to 31₄ do not overlap each other in the optical axis direction (when viewed from the optical axis direction), and transmits the lens information including the region specification information to the camera body 10 serving as the external device, for example. In addition, the camera body 10 receives the lens information and specifies the regions of the facet images E1 to E4 corresponding to the respective facet lenses 31₁ to 31₄ in the captured image, on the basis of the region specification information included in the lens information. This makes it possible to easily obtain the images of the plurality of viewpoints, that is, the facet images E1 to E4 captured by using the positions of the respective facet lenses 31₁ to 31₄ as the viewpoints.

### <Display Example of Through Image>

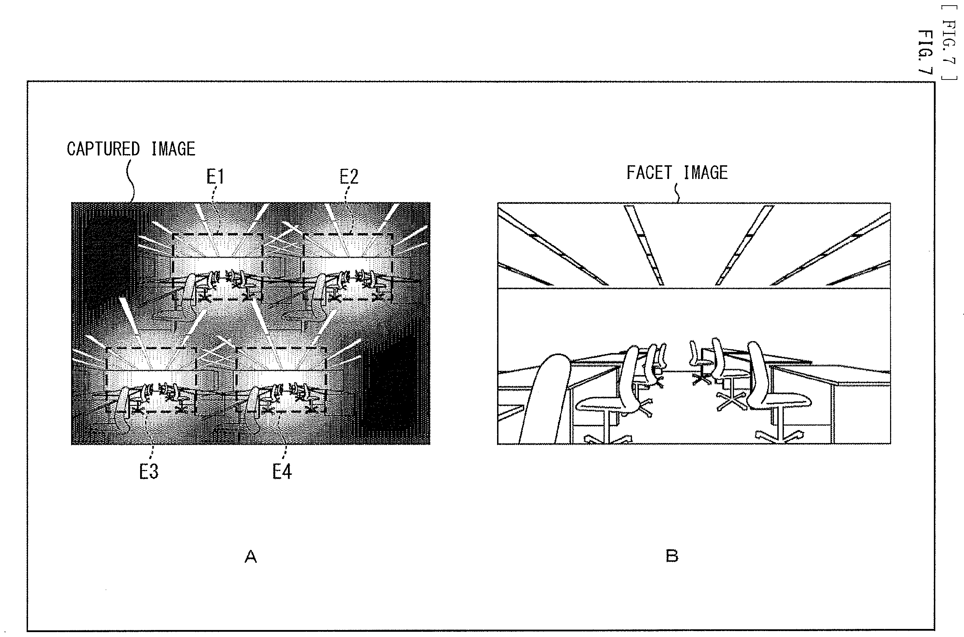

FIG. 7 illustrates a display example of through images displayed on the display 54 illustrated in FIG. 3.

FIG. 7A illustrates a first display example of the through image. As the through image, it is possible to adopt the image captured by the image sensor 51 as illustrated in FIG. 7A. In a case where the captured image is adopted as the through image, the image processor 53 acquires the image captured by the image sensor 51 from the region specification section 52, supplies the image to the display 54, and causes the image to be displayed.

FIG. 7B illustrates a second display example of the through image. As the through image, it is possible to adopt one facet image E#i as illustrated in FIG. 7B. In a case where the one facet image E#i is adopted as the through image, the image processor 53 selects the one facet image E#i from among the facet images E1 to E4 supplied from the region specification section 52, supplies the one facet image E#i to the display 54, and causes the one facet image E#i to be displayed.

Note that, it is possible to select whether to display the captured image or the one facet image E#i as the through image in response to user operation or the like, for example.

In addition, in a case where the one facet image E#i is adopted as the through image, it is possible to selectively switch the one facet image E#i serving as the through image to another one selected from among the facet images E1 to E4 in response to user operation or the like, for example.

Moreover, as the through image, it is also possible to adopt an image obtained through the refocusing performed by the image processor 53.

### <Overview of Optical Configuration Example of Multi-Eye Interchangeable Lens 20>

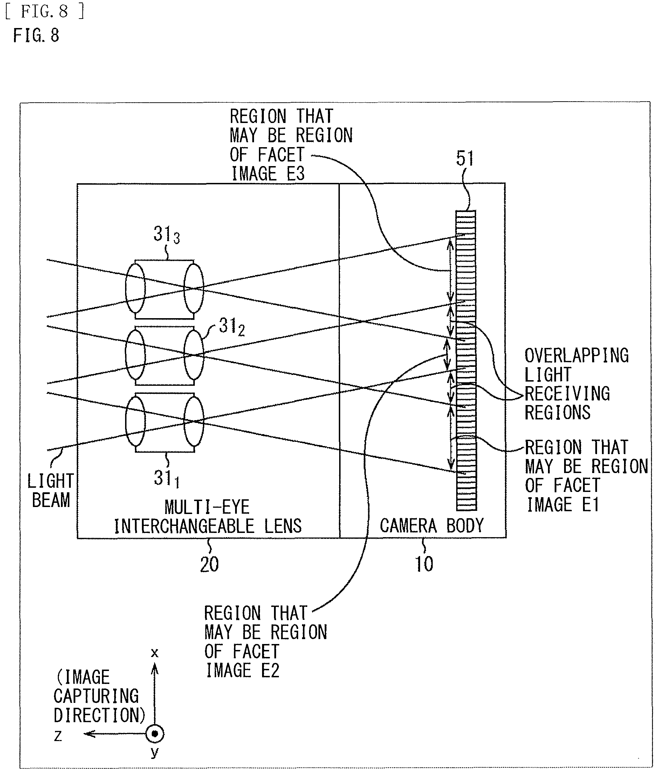

FIG. 8 is a cross-sectional view illustrating an overview of a first optical configuration example of the multi-eye interchangeable lens 20.

It is to be noted that, here, for ease of explanation, the multi-eye interchangeable lens 20 is assumed to include the three facet lenses 311 to 313, and the three facet lenses 311 to 313 are assumed to be disposed in line in the horizontal direction (the x direction) in a manner that they do not overlap each other when viewed from the optical axis direction (the x direction).

In a case where the multi-eye interchangeable lens 20 does not include an optical component that limits light beams passed through the facet lenses 31ᵢ, a relatively wide range of the light receiving surface of the image sensor 51 is irradiated with the light beams passed through the facet lenses 31ᵢ as illustrated in FIG. 8.

In this case, as regards the facet lenses 31₁ and 31₂ that are adjacent to each other among the three facet lenses 311 to 313, the light receiving surface of the image sensor 51 is irradiated with a light beam passed through the facet lens 311 and a light beam passed through the facet lens 312 in a manner that portions of the light beams overlap each other. As a result, the overlapping light receiving region is formed in the captured image. The same applies to the facet lenses 31₂ and 31₃ that are adjacent to each other.

As regards the three facet lenses 31₁ to 31₃ disposed in line in the horizontal direction, the light beam passed through the facet lens 312 that is adjacent to the facet lenses 311 and 313 overlaps the light beam passed through the facet lens 311, and overlaps the light beam passed through the facet lens 313. As a result, a region in the captured image that may be the region of the facet image E2 corresponding to the facet lens 31₂ and that is irradiated with only the light beam passed through the facet lens 312 becomes smaller than the cases of the facet lenses 31₁ and 31₃.

Therefore, the size of the facet image E2 corresponding to the facet lens 312 is small. In addition, the sizes of the facet images E1 and E2 also become smaller in a case where the sizes of the facet images E1 to E3 corresponding to the respective facet lenses 31₁ to 31₃ are the same.

Therefore, it is possible to provide a diaphragm that limits light beams reaching the image sensor 51 from the respective facet lenses 31ᵢ, for each of all the facet lenses 311 to 313 included in the multi-eye interchangeable lens 20.

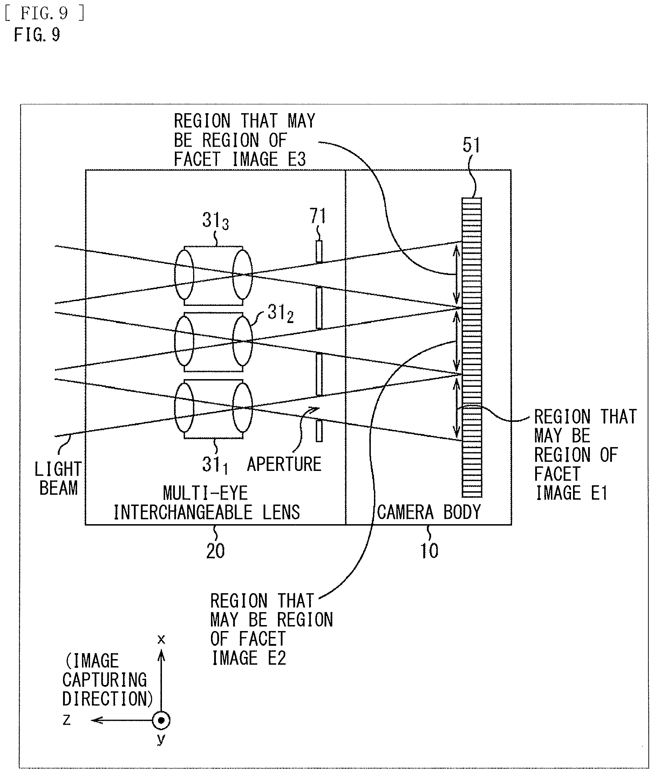

FIG. 9 is a cross-sectional view illustrating an overview of a second optical configuration example of the multi-eye interchangeable lens 20.

It is to be noted that, in FIG. 9, the multi-eye interchangeable lens 20 is also assumed to include the three facet lenses 31₁ to 31₃, and the three facet lenses 31₁ to 31₃ are assumed to be disposed in line in the horizontal direction in a manner that they do not overlap each other in the optical axis direction in a way similar to the case illustrated in FIG. 8.

In FIG. 9, the multi-eye interchangeable lens 20 includes a diaphragm 71 that limits light beams reaching the image sensor 51 from the respective facet lenses 31ᵢ, as regards the facet lenses 31₁ to 31₃.

The diaphragm 71 has circular apertures that limit light beams from the facet lenses 31ᵢ in a manner that a light beam collected through one facet lens 31ᵢ among the facet lenses 311 to 313 does not overlap a light beam collected through another facet lens 31ⱼ among the facet lenses 31₁ to 31₃.

It is possible to set the arrangement of the facet lenses 31₁ to 31₃ and the diaphragm 71 and the sizes of the apertures of the diaphragm 71 in a manner that the light beam collected through one facet lens 31ᵢ does not overlap the light beam collected through another facet lens 31ⱼ (to a possible extent) and a region on the light receiving surface of the image sensor 51 irradiated with the light beam collected through the facet lens 31ᵢ becomes larger (the region ideally becomes maximized).

In this case, it is possible to obtain the facet image E#i having a large size by effectively using the light receiving surface of the image sensor 51.

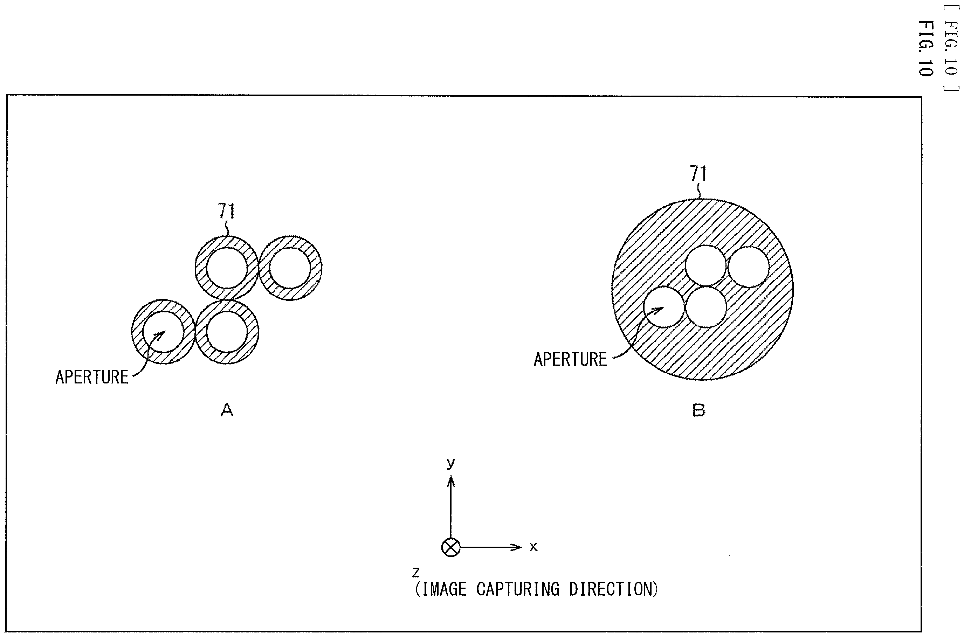

FIG. 10 is a rear view illustrating an overview of configuration examples of the diaphragms 71 in a case where the multi-eye interchangeable lens 20 includes the four facet lenses 31₁ to 31₄ as illustrated in FIG. 5.

FIG. 10A illustrates a first configuration example of the diaphragm 71.

It is possible to adopt individual diaphragms respectively corresponding to the four facet lenses 31₁ to 31₄ as the diaphragms 71, and it is possible to dispose the individual diaphragms on rear surfaces of the respective facet lenses 31₁ to 31₄.

FIG. 10B illustrates a second configuration example of the diaphragm 71.

As the diaphragm 71, it is possible to adopt one diaphragm that has respective apertures corresponding to the four facet lenses 31₁ to 31₄ and that is installed on one plate, and it is possible to dispose the diaphragm on the rear surfaces of the facet lenses 31₁ to 31₄.

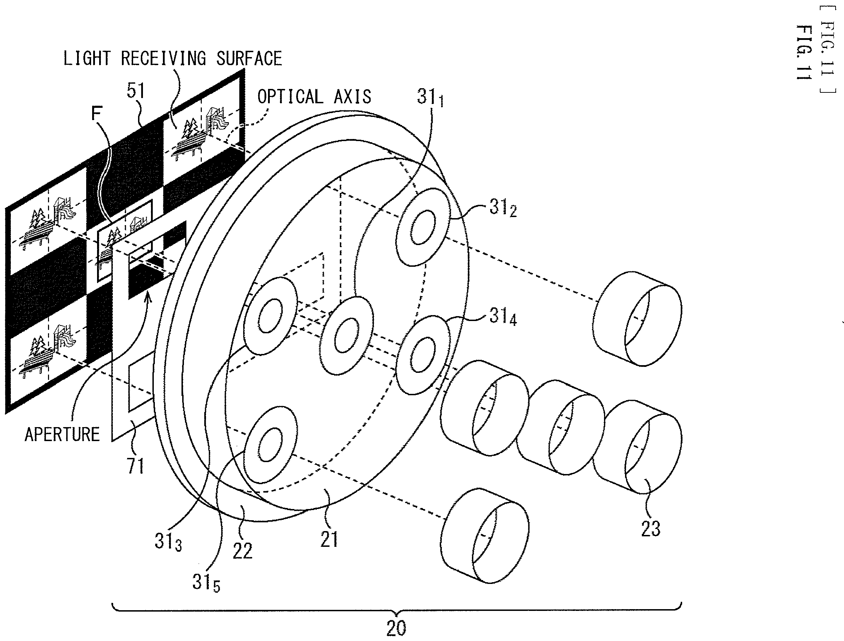

FIG. 11 is a perspective view illustrating another configuration example of the multi-eye interchangeable lens 20 including the diaphragm 71.

In FIG. 11, the multi-eye interchangeable lens 20 includes five facet lenses 31₁ to 31₅, and the five facet lenses 31₁ to 31₅ are disposed on a two-dimensional plane in a manner that they do not overlap each other in the optical axis direction.

In addition, in FIG. 11, the five facet lenses 311 to 31s are disposed such that, for example, the facet lens 311 that is one of the five facet lenses 311 to 31s is disposed as the center and the four other facet lenses 312 to 31s are disposed as vertices of a rectangle surrounding the facet lens 311.

In addition, in FIG. 11, the diaphragm 71 is disposed on the rear surface side of the facet lenses 31₁ to 31₅. It is possible to store the diaphragm 71 in the lens barrel 21 of the multi-eye interchangeable lens 20, for example. However, FIG. 11 illustrates the state where the diaphragm 71 is apart from the multi-eye interchangeable lens 20 for facilitating visualization of FIG. 11.

In addition, in FIG. 11, rectangular apertures are adopted as the apertures of the diaphragm 71. In a case where the rectangular apertures are adopted as the apertures of the diaphragm 71, it is possible to limit a region in the light receiving surface of the image sensor 51 irradiated with light passed through a facet lens 31ᵢ, to a rectangular region F.

It is to be noted that each of the facet lenses 31ᵢ of the multi-eye interchangeable lens 20 may be equipped with a lens hood 23 that blocks a portion of the light incident on the facet lens 31ᵢ. The lens hood 23 may be fixed to the multi-eye interchangeable lens 20, and may be attachable and detachable to and from the multi-eye interchangeable lens 20.

### <Exposure Control>

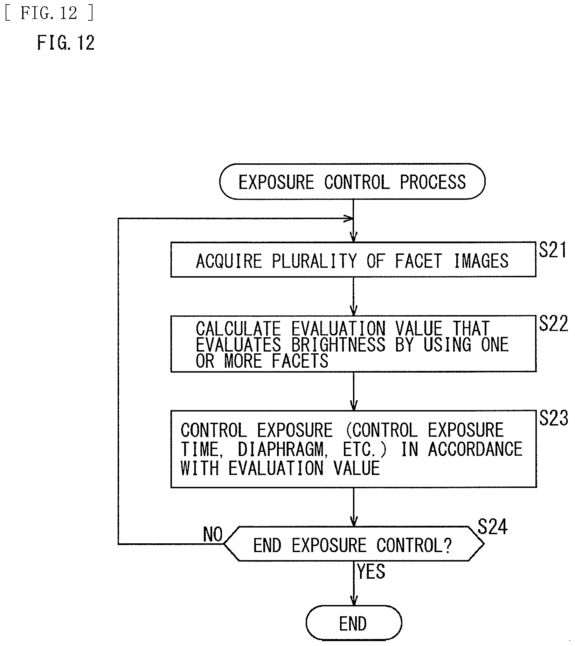

FIG. 12 is a flowchart for describing an example of a process (an exposure control process) of exposure control performed by the controller 56 illustrated in FIG. 3.

An exposure control method includes a method including: determining a brightness evaluation value that evaluates brightness of the captured image using an image captured by the image sensor 51 (FIG. 3); and controlling exposure time (shutter speed), apertures of the diaphragm, gain (analog gain) of A/D conversion performed on pixel signals by the image sensor 51, and the like in accordance with the bright evaluation value in a manner that the captured image does not include so-called blown-out highlights and achieves appropriate predetermined brightness.

However, in a case of using the camera body 10 equipped with the multi-eye interchangeable lens 20, the image captured by the image sensor 51 (FIG. 3) may possibly include the non-light receiving region and the overlapping light receiving region as described with reference to FIG. 5. Sometimes this makes it difficult to obtain the brightness evaluation value for appropriately controlling exposure when the brightness evaluation value is determined by using such a captured image.

Accordingly, the controller 56 determines a brightness evaluation value and controls exposure by using (an image in a region of) the facet image E#i instead of the captured image (itself).

It is to be noted that, here, the multi-eye interchangeable lens 20 is assumed to include the four facet lenses 311 to 314 and the region specification section 52 is assumed to obtain the four facet images E1 to E4 as illustrated in FIG. 5.

In addition, it is assumed that the image sensor 51 periodically captures an image and supplies the captured image to the region specification section 52, and the region specification section 52 extracts the four facet images E1 to E4 from the image captured by the image sensor 51.

In Step S21, the controller 56 acquires the four facet images E1 to E4 from the region specification section 52, and the process proceeds to Step S22.

In Step S22, the controller 56 calculates brightness evaluation values that evaluates brightness (evaluation values that evaluates current exposure states) of the facet images E1 to E4 by using some or all of the four facet images E1 to E4, that is, one, two, or more of the four facet images E1 to E4. Subsequently, the process proceeds to Step S23.

In Step S23, the controller 56 controls exposure, that is, exposure time, the diaphragm, and gain in accordance with the brightness evaluation values, and the process proceeds to Step S24.

In Step S24, the controller 56 determines whether to end the AE exposure control.

In a case where the controller 56 determines not to end the exposure control in Step S24, the process returns to Step S21, and similar processes are repeated thereafter.

Alternatively, in a case where the controller 56 determines to end the exposure control in Step S24, that is, for example, in a case where the user operates the camera body 10 to end the AE, the exposure control process ends.

As described above, the brightness evaluation values are calculated by using some or all of the facet images E1 to E4. This makes it possible to obtain the brightness evaluation values that are not affected by the non-light receiving region or the overlapping light receiving region, and this makes it possible to appropriately control exposure in accordance with the brightness evaluation values.

### <Configuration Example of Image processor 53>

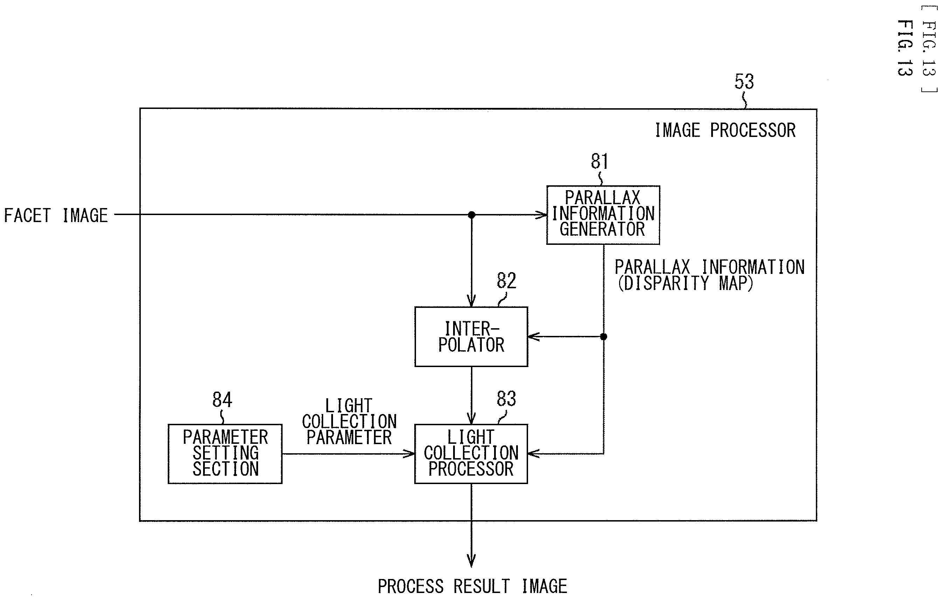

FIG. 13 is a block diagram illustrating a functional configuration example of sections that perform the refocusing in the image processor 53 illustrated in FIG. 3.

Here, in a case where the multi-eye interchangeable lens 20 includes, for example, the facet lenses 31₁ to 31₄ as illustrated in FIG. 5, the region specification section 52 supplies the facet images E1 to E4 corresponding to the facet lenses 31₁ to 31₄ to the image processor 53. The facet images E1 to E4 that correspond to the facet lenses 31₁ to 31₄ and that are supplied from the region specification section 52 to the image processor 53 are images captured by using the positions of the respective facet lenses 31₁ to 31₄ as viewpoints in a way similar to images captured by the independent cameras from positions of the respective facet lenses 31₁ to 31₄. In addition, the facet images E1 to E4 are images of different viewpoints.

In FIG. 13, the image processor 53 includes a parallax information generator 81, an interpolator 82, a light collection processor 83, and a parameter setting section 84.

The region specification section 52 supplies the image processor 53 with the facet images E#i of the plurality of viewpoints, which are the images of the plurality of viewpoints.

It is to be noted that, here, the viewpoints regarding the facet images E#i are positions of the facet lenses 31ᵢ.

In the image processor 53, the facet images E#i are supplied to the parallax information generator 81 and the interpolator 82.

The parallax information generator 81 determines parallax information by using the facet images E#i of the plurality of viewpoints supplied from the region specification section 52, and supplies the parallax information to the interpolator 82 and the light collection processor 83.

In other words, for example, the parallax information generator 81 performs a process of determining the parallax information between the respective facet images E#i and other facet images E#j supplied from the region specification section 52, as image processing of the facet images E#i of the plurality of viewpoints. Next, the parallax information generator 81 generates a map in which pieces of the parallax information are registered in association with, for example, respective (positions of) pixels in the facet images, and supplies the map to the interpolator 82 and the light collection processor 83.

Here, as the parallax information, it is possible to adopt disparity that represents parallax by using the number of pixels, or any information such as a distance in a depth direction corresponding to the parallax or the like, which is convertable into the parallax. In the present embodiment, it is assumed that, for example, the disparity is adopted as the parallax information, and the parallax information generator 81 generates a disparity map in which the disparity is registered, as the map in which the parallax information is registered.

The interpolator 82 uses the plurality of facet images E#i supplied from the region specification section 52 and the disparity map generated by the parallax information generator 81, and generates, through interpolation, images that would be captured from viewpoints other than the viewpoints of the facet images E#i, that is, the positions of the facet lenses 31ᵢ.

As the viewpoints for the interpolation, the interpolator 82 uses a plurality of points having substantially equal intervals within a region surrounded straight lines each connecting the viewpoints of the facet images E#i, that is, the positions of the facet lenses 31ᵢ. The interpolator 82 generates images of the viewpoints for the interpolation (images that may be captured from the viewpoints for the interpolation) through interpolation.

It is to be noted that the interpolator 82 also makes it possible to generate images of viewpoints for interpolation, as the viewpoints for the interpolation, by using points outside the region surrounded with straight lines each connecting the positions of the facet lenses 3 1ᵢ.

After the images of the viewpoints for the interpolation are generated, the interpolator 82 supplies the facet images E#i and the images of the viewpoints for the interpolation, to the light collection processor 83.

Here, the images generated by the interpolator 82 through the interpolation using the facet images are also referred to as interpolation images.

In addition, a set of the facet images E#i and the interpolation images of the viewpoints for the interpolation that have been supplied from the interpolator 82 to the light collection processor 83 is referred to as viewpoint images.

It is possible to consider the interpolation performed by the interpolator 82 as a process of generating viewpoint images of more viewpoints from the facet images E#i of the plurality of viewpoints. It is possible to treat the process of generating the viewpoint images of more viewpoints as a process of reproducing light beams incident from real-space points in the real space.

The light collection processor 83 uses the viewpoint images of the plurality of viewpoints supplied from the interpolator 82, and performs the light collection process that is image processing corresponding to collecting light beams from a subject and that have been passed through an optical system such as lenses in a real camera on the image sensor or a film and forming pictures of the subject.

In the light collection process performed by the light collection processor 83, refocusing for generating (reconstituting) an image that focuses on any subject is performed. The refocusing is performed by using the disparity map obtained from the parallax information generator 81 and a light collection parameter obtained from the parameter setting section 84.

The image obtained through the light collection process performed by the light collection processor 83 is outputted as a process result image (to the display 54 and the storage 55 (FIG. 3)).

The parameter setting section 84 sets pixels of one facet image E#i (such as the facet image E1) at a position in designated by user operation performed on an operation section (not illustrated), a predetermined application, or the like, as focus target pixels to be brought into focus (or showing the subject), and supplies the focus target pixels as light collection parameters to the light collection processor 83.

### <Image Processing Performed by Image Processor 53>

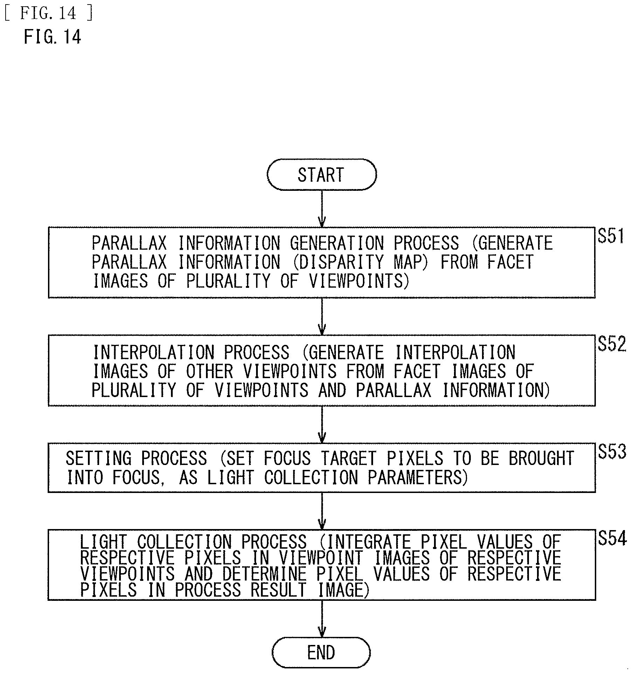

FIG. 14 is a flowchart for describing an example of image processing performed by the image processor 53 illustrated in FIG. 13.

In the image processor 53, the parallax information generator 81 and the interpolator 82 are supplied with the facet images E#i of the plurality of viewpoints, which are images of the plurality of viewpoints supplied from the region specification section 52.

In Step S51, the parallax information generator 81 in the image processor 53 uses the facet images E#i of the plurality of viewpoints supplied from the region specification section 52, and performs a parallax information generation process of determining parallax information and generating a disparity map on which the parallax information is registered.

The parallax information generator 81 supplies the interpolator 82 and the light collection processor 83 with the disparity map obtained though the parallax information generation process, and the process proceeds from Step S51 to Step S52.

In Step S52, the interpolator 82 uses the facet images E#i of the plurality of viewpoints supplied from the region specification section 52 and the disparity map generated by the parallax information generator 81, and performs an interpolation process of generating interpolation images of a plurality of viewpoints for interpolation other than the viewpoints of the facet images E#i.

In addition, as the viewpoint images of the plurality of viewpoints, the interpolator 82 supplies the light collection processor 83 with the facet images E#i of the plurality of viewpoints supplied from the region specification section 52 and the interpolation images of the plurality of viewpoints for the interpolation obtained through the interpolation process, and the process proceeds from Step S52 to Step S53.

In Step S53, the parameter setting section 84 performs a setting process of setting pixels of one viewpoint image (such as the facet image E1) at a position designated by user operation or the like as the focus target pixels to be brought into focus.

The parameter setting section 84 supplies the light collection processor 83 with (information regarding) the focus target pixels obtained through the setting process, as the light collection parameters. Next, the process proceeds from Step S53 to Step S54.

Here, the focus target pixels are set in accordance with the designation from the user as described above. Alternatively, it is possible to set the focus target pixels in accordance with, for example, designation from an application, designation based on predetermined rules, or the like. For example, it is possible to set, as the focus target pixels, pixels showing the subject moving at a predetermined speed or higher, or pixels showing the subject moving continuously for a predetermined time or longer.

In step S54, the light collection processor 83 performs a light collection process corresponding to collection of light beams from the subject onto a virtual sensor (not illustrated) by using the viewpoint images of the plurality of viewpoints supplied from the interpolator 82, the disparity map supplied from the parallax information generator 81, and the focus target pixels serving as the light collection parameters supplied from the parameter setting section 84. Subsequently, the image processing performed by the image processor 53 ends.

The light collection processor 83 supplies the display 54 with the process result image obtained as a result of the light collection process.

It is to be noted that the virtual sensor that collects the light beams in the light collection process is actually memory (not illustrated), for example. In the light collection process, pixel values of the viewpoint images of the plurality of viewpoints are integrated in (storage values of) the memory serving as the virtual sensor, as luminance of the light beams collected onto the virtual sensor. Thus, pixel values of the image obtained through collection of the light beams are determined.

In the light collection process performed by the light collection processor 83, a reference shift amount BV (described later), which is a pixel shift amount for performing pixel shift on the pixels of the viewpoint images of the plurality of viewpoints, is set. The (pixel values of the) pixels of the viewpoint images of the plurality of viewpoints are subjected to the pixel shift in accordance with the reference shift amount BV, and are then integrated. Thus, each pixel value of a process result image focused on an in-focus point in the real space is determined, and the process result image is generated.

Here, the in-focus point is a real-space point in the real space at which an image is brought into focus. In the light collection process performed by the light collection processor 83, an in-focus plane that is a plane formed of a group of the in-focus points is set by using focus target pixels serving as the light collection parameters supplied from the parameter setting section 84.

It is to be noted that the image processor 53 (FIG. 13) may include only the light collection processor 83.

For example, in a case where the light collection processor 83 performs the light collection process by using the facet images E#i captured by the region specification section 52 without any interpolation image, it is possible to configure the image processor 53 that does not include the interpolator 82. However, in a case where the light collection process is performed by using the interpolation images in addition to the facet images E#i, it is possible to suppress generation of ringing regarding an unfocused subject in the process result image.

Further, for example, in a case where it is possible for an external apparatus to generate the parallax information regarding the facet images E#i by using a distance sensor or the like and to acquire the parallax information from the external apparatus, it is possible to configure the image processor 53 that does not include the parallax information generator 81.

Furthermore, for example, in a case where the light collection processor 83 sets the in-focus plane in accordance with a predetermined rule, it is possible to configure the image processor 53 that does not include the parameter setting section 84.

In addition, it is possible to configure the camera body 10 that does not include the image processor 53.

### <Another Configuration Example of Multi-Eye Interchangeable Lens>

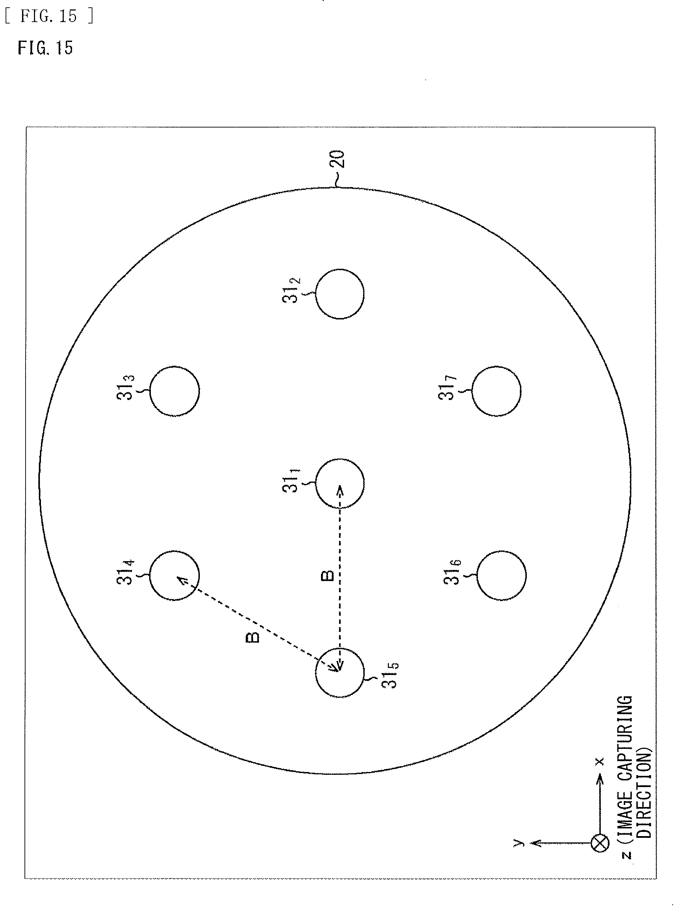

FIG. 15 is a rear view illustrating another configuration example of the multi-eye interchangeable lens 20.

In FIG. 15, the multi-eye interchangeable lens 20 includes seven facet lenses 31₁ to 31₇, and the seven facet lenses 31₁ to 31₇ are disposed on a two-dimensional plane in a manner that they do not overlap each other in the optical axis direction.

In addition, in FIG. 15, the seven facet lenses 31₁ to 31₇ are disposed in a manner that one of the seven facet lenses 31₁ to 31₇, for example, facet lens 311, is set as the center and the six other facet lenses 31₂ to 31₇ are disposed around the facet lens 31₁, the facet lenses 31₂ to 31₇ serving as vertices of a regular hexagon.

Accordingly, in FIG. 15, the distance between (optical axes of) any facet lens 31ᵢ (i = 1, 2, ..., 7) among the seven facet lenses 31₁ to 31₇ and another facet lens 31ⱼ (j = 1, 2, ..., 7) that is closest to the facet lens 31ᵢ is a distance B.

Hereinafter, the example in which the multi-eye interchangeable lens 20 includes the seven facet lenses 31₁ to 31₇ as illustrated in FIG. 15 is described.

In a case where the multi-eye interchangeable lens 20 includes the seven facet lenses 31₁ to 31₇ as illustrated in FIG. 15, facet images E#i of a plurality of viewpoints supplied from the region specification section (FIG. 3) to the parallax information generator 81 and the interpolator 82 of the image processor 53 are facet images E1 to E7 of seven viewpoints corresponding to the seven facet lenses 31₁ to 31₇.

### <Generation of Interpolation Image>

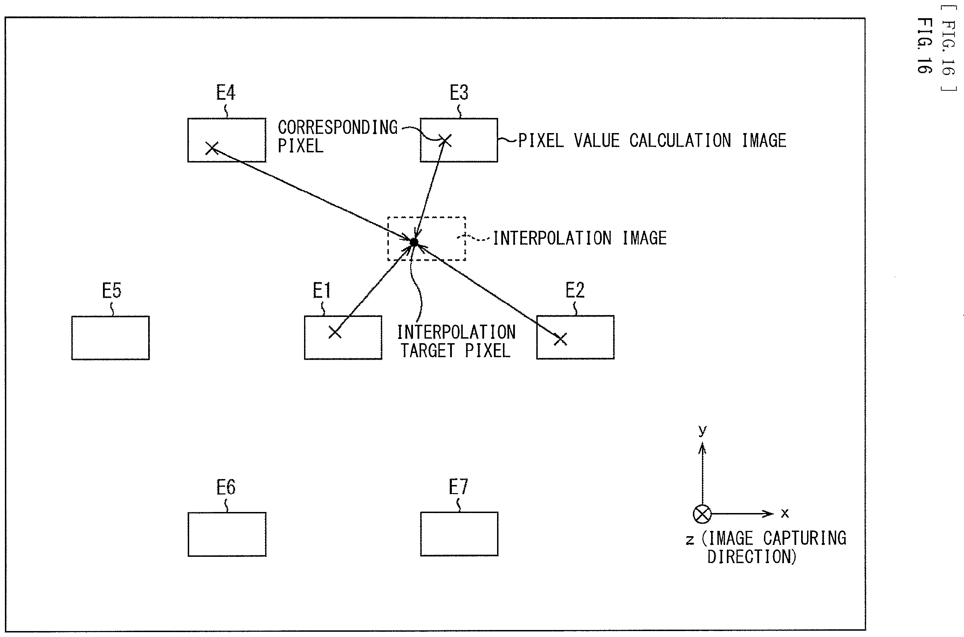

FIG. 16 is a diagram for describing an example in which the interpolator 82 illustrated in FIG. 13 generates an interpolation image.

In a case of generating an interpolation image of a certain viewpoint, the interpolator 82 sequentially selects pixels of the interpolation image, each as an interpolation target pixel for interpolation. The interpolator 82 further selects, as a pixel value calculation image to be used for calculating a pixel value of the interpolation target pixel, all of the facet images E1 to E7 of the seven viewpoints or facet images E#i of some (a plurality of) viewpoints close to the viewpoint of the interpolation image. The interpolator 82 uses the disparity map supplied from the parallax information generator 81 and the viewpoint of the interpolation image, and determines a corresponding pixel corresponding to the interpolation target pixel (a pixel in which a spatial point is shown, which is the same point as a spatial point that would be shown on the interpolation target pixel if the imaging is performed from the viewpoint of the interpolation image) from the respective facet images E#i of the plurality of viewpoints selected as the pixel value calculation images.

The interpolator 82 then weights the pixel values of the corresponding pixels in the facet images E#i of the plurality of viewpoints, and determines a resultant weighted value as the pixel value of the interpolation target pixel.

As the weight used for weighting the pixel value of the corresponding pixel, it is possible to adopt a value that is inversely proportional to a distance between the viewpoints of the facet images E#i serving as the pixel value calculation images including the corresponding pixels and the viewpoint of the interpolation image including the interpolation target pixel.

### <Generation of Disparity Map>

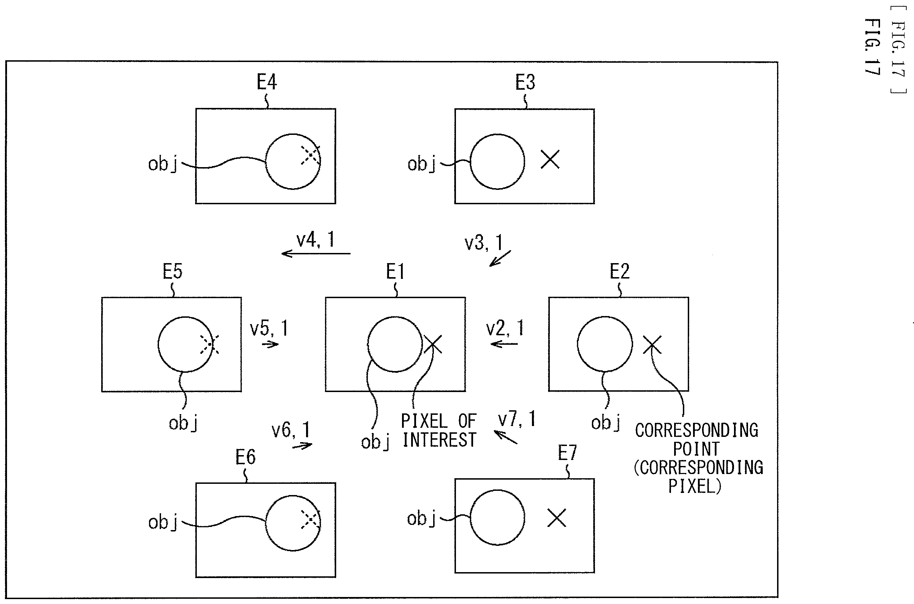

FIG. 17 is a diagram for describing an example in which the parallax information generator 81 illustrated in FIG. 13 generates a disparity map.

In other words, FIG. 17 illustrates an example of the facet images E1 to E7 corresponding to the facet lenses 31₁ to 31₇ of the region specification section 52.

In FIG. 17, the facet images E1 to E7 each show a predetermined object obj as a foreground in front of a predetermined background. Because the facet images E1 to E7 have different viewpoints, for example, the positions (the positions in the facet images) of the objects obj shown in the respective facet images E2 to E7 differ from the position of the object obj shown in the facet image E1 by the amounts corresponding to the differences in the viewpoints.

Here, the viewpoint (position) of the facet lens 31ᵢ, that is, the viewpoint of the viewpoint of the facet image E#i corresponding to the facet lens 31ᵢ is referred to as vp#i.

For example, in a case of generating a disparity map of the viewpoint vp1 of the facet image E1, the parallax information generator 81 sets the facet image E1 as an image of interest E1 to which attention is paid. In addition, the parallax information generator 81 sequentially selects pixels in the image of interest E1, each as a pixel of interest to which attention is paid, and detects a corresponding pixel (corresponding point) corresponding to the pixel of interest from each of other facet images E2 to E7.

Examples of a method of detecting the corresponding pixel corresponding to the pixel of interest in the image of interest E1 from each of the facet images E2 to E7 include a method that uses a principle of triangulation, such as stereo matching or multi-baseline stereo.

Here, a vector representing positional shift of the corresponding pixel in a facet image E#i from the pixel of interest in the image of interest E1 is referred to as a disparity vector v#i, 1.

The parallax information generator 81 determines disparity vectors v2, 1 to v7, 1 with regard to the respective facet images E2 to E7. The parallax information generator 81 then takes a majority vote on magnitudes of the disparity vectors v2, 1 to v7, 1, for example, and determines the magnitude of the disparity vector v#i, 1 that is selected by the majority vote as magnitude of disparity of (the position of) the pixel of interest.

Here, in a case where distances between the facet lens 31₁ that has obtained the image of interest E1 and the respective facet lenses 31₂ to 31₇ that have obtained the facet images E2 to E7 are the same distance B as described above with reference to FIG. 15, the region specification section 52 obtains vectors that differ in orientation but are equal in magnitude as the disparity vectors v2, 1 to v7, 1, when the real-space point shown in the pixel of interest in the image of interest E1 is also shown in each of the facet images E2 to E7.

In other words, the disparity vectors v2, 1 to v7, 1 in this case are vectors that are equal in magnitude and are in directions opposite to the directions of the viewpoints vp2 to vp7 of the other facet images E2 to E7 relative to the viewpoint vp1 of the image of interest E1.

It is to be noted that, among the facet images E2 to E7, there may be an image with occlusion, that is, an image in which the real-space point shown in the pixel of interest in the image of interest E1 is hidden behind the foreground.

From a facet image E#i that does not show the real-space point shown in the pixel of interest in the image of interest E1 (hereinafter also referred to as an occlusion image), it is difficult to detect a correct pixel as the corresponding pixel corresponding to the pixel of interest.

Therefore, regarding the occlusion image E#i, a disparity vector v#i, 1 is determined, which has a different magnitude from disparity vectors v#j, 1 of the facet images E#j showing the real-space point shown in the pixel of interest of the image of interest E1.

Among the facet images E2 to E7, the number of images with occlusion with regard to the pixel of interest is estimated to be smaller than the number of images with no occlusion. Therefore, as described above, the parallax information generator 81 takes a majority vote on magnitudes of the disparity vectors v2, 1 to v7, 1, and determines the magnitude of the disparity vector v#i, 1, which is selected by the majority vote, as magnitude of disparity of the pixel of interest.

In FIG. 17, among the disparity vectors v2, 1 to v7, 1, the three disparity vectors v2, 1, v3, 1, and v7, 1 are vectors of the same magnitude. Meanwhile, there are no disparity vectors of the same magnitude among the disparity vectors v4, 1, v5, 1, and v6, 1.

Therefore, the magnitude of the three disparity vectors v2, 1, v3, 1, and v7, 1 are determined as the magnitude of the disparity of the pixel of interest.

Note that, it is possible to recognize the direction of the disparity between the pixel of interest in the image of interest E1 and any of the facet images E#i, from a positional relationship (such as a direction from the viewpoint vp1 toward the viewpoint vp#i) between the viewpoint vp1 of the image of interest E1 (the position of the facet lens 31₁) and the viewpoint vp#i of the facet image E#i (the position of the facet lens 31ᵢ).

The parallax information generator 81 sequentially selects pixels in the image of interest E1, each as a pixel of interest, and determines the magnitude of the disparity. The parallax information generator 81 then generates, as a disparity map, a map in which magnitudes of disparities of the pixels of the image of interest E1 are registered in association with the positions (xy coordinates) of the respective pixels. Accordingly, the disparity map is a map (table) in which the positions of the pixels are associated with the magnitudes of the disparities of the pixels.

It is also possible to generate disparity maps of the viewpoints vp#i of the other facet images E#i in a way similar to the disparity map of the viewpoint vp1.

It is to be noted that, when generating the disparity maps of the viewpoints vp#i other than the viewpoint vp1, the majority vote is taken on the disparity vectors after the magnitudes of the disparity vectors are adjusted on the basis of the positional relationship between the viewpoint vp#i of a facet image E#i and viewpoints vp#j of facet images E#j other than the facet image E#i (a positional relationship between the facet lenses 31ᵢ and 31ⱼ) (a distance between the viewpoint vp#i and the viewpoint vp#j).

In other words, for example, in a case where the facet image E5 is set as the image of interest and a disparity map is generated, a disparity vector obtained between the image of interest E5 and the facet image E2 is twice greater than a disparity vector obtained between the image of interest E5 and the facet image E1.

One reason for this is that, while a baseline length that is a distance between the optical axis of the facet lens 31s which has obtained the image of interest E5 and the optical axis of the facet lens 311 which has obtained the facet image E1 is the distance B, a baseline length between the facet lens 31s which has obtained the image of interest E5 and the facet lens 31₂ which has obtained the facet image E2 is a distance 2B.

In view of this, here, the distance B, which is the baseline length between the facet lens 311 and another facet lens 31ᵢ, for example, is referred to as a reference baseline length, which is a criteria for determining a disparity. The majority vote on disparity vectors is taken after the magnitudes of the disparity vectors are adjusted in a manner that the baseline lengths is converted into the reference baseline length B.

In other words, for example, because the reference baseline length B between the facet lens 31s which has obtained the image of interest E5 and the facet lens 311 which has obtained the facet image E1 is equal to the reference baseline length B, the magnitude of the disparity vector obtained between the image of interest E5 and the facet image E1 is adjusted to a magnitude that is one time greater.

Further, for example, because the baseline length 2B between the facet lens 31₅ which has obtained the image of interest E5 and the facet lens 31₂ which has obtained the facet image E2 is equal to twice the reference baseline length B, the magnitude of the disparity vector obtained between the image of interest E5 and the facet image E2 is adjusted to a magnification that is 1/2 greater, 1/2 being a value of a ratio of the reference baseline length B to the baseline length 2B between the facet lens 31₅ and the facet lens 31₂.

In a similar way, the magnitude of the disparity vector obtained between the image of interest E5 and another facet image E#i is adjusted to a magnitude multiplied by a ratio of the reference baseline length B to a baseline length between the facet lens 31s and the facet lens 31ᵢ.

A majority vote is then taken on the disparity vectors by using the disparity vectors subjected to the magnitude adjustment.

Note that, it is possible for the parallax information generator 81 to determine a disparity of (each of the pixels of) a facet image E#i with precision of the pixels of the facet image, for example. Further, it is also possible to determine the disparity of the facet image E#i with precision that is equal to or lower than pixels having a higher precision than the pixels of the facet image E#i (for example, the precision of sub pixels such as 1/4 pixels).

In a case of determining a disparity with the precision that is equal to or lower than the pixels, the disparity with the precision that is equal to or lower than the pixels may be used as it is in a process using disparities, or the disparity with the precision that is equal to or lower than the pixels may be used after being converted into integers through rounding down, rounding up, or rounding off.

Here, magnitudes of disparities registered on the disparity map are hereinafter also referred to as registered disparities. For example, in a case of representing a vector serving as a disparity in a two-dimensional coordinate system in which an axis extending from left to right is an x axis while an axis extending from bottom to top is a y axis, the registered disparities are equal to x components of disparities between respective pixels in the facet image E1 and the facet image E5 of the viewpoint that is on the left side of the facet image E1 (vectors representing pixel shift from pixels in the facet image E1 to corresponding pixels in the facet image E5, the corresponding pixels corresponding to the pixels in the facet image E1).

### <Refocusing Through Light Collection Process>

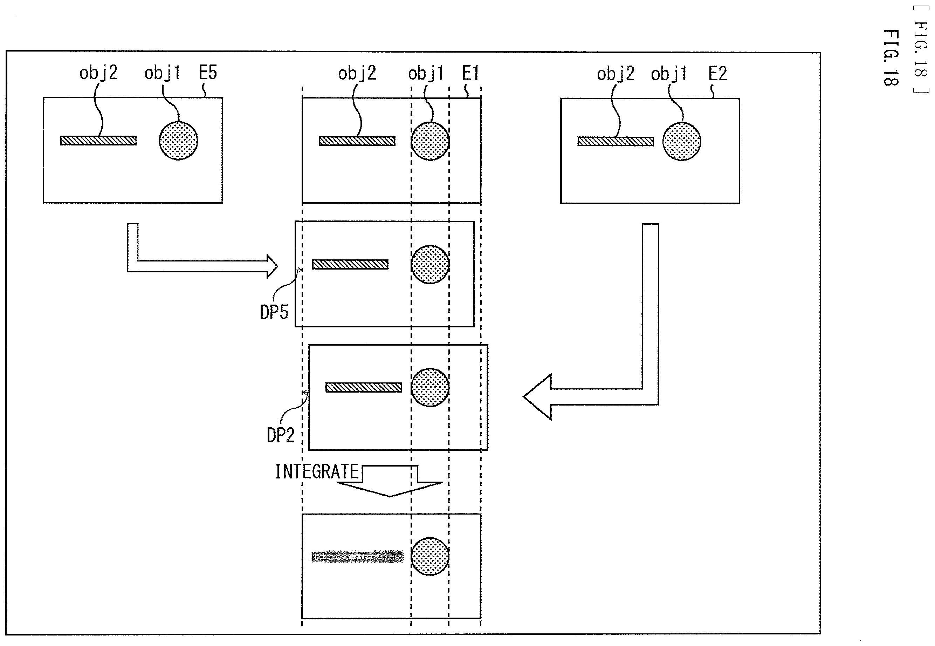

FIG. 18 is a diagram for describing an overview of the refocusing performed by the light collection processor 83 illustrated in FIG. 13 through the light collection process.

It is to be noted that, for ease of explanation, three images are used in FIG. 18 as viewpoint images of a plurality of viewpoints for the light collection process. The three images are the facet image E1, the facet image E2 of the viewpoint that is on the right side of the facet image E1, and the facet image E5 of the viewpoint that is on the left side of the facet image E1.

In FIG. 18, two objects obj1 and obj2 are shown in the facet images E1, E2, and E5. For example, the object obj1 is located on a near side, and the object obj2 is located on a far side.

Here, for example, refocusing is performed to focus on (or put a focus on) the object obj1, and an image viewed from the viewpoint of the facet image E1 is obtained as a process result image after the refocusing.

Here, DP1 represents a disparity between the pixels showing the object obj1 in the facet image E1 and the viewpoint of the process result image (here, the viewpoint of the facet image E1). In addition, DP2 represents a disparity between the pixels showing the object obj1 in the facet image E2 and the viewpoint of the process result image, and DP5 represents a disparity between the pixels showing the object obj1 in the facet image E5 and the viewpoint of the process result image.

It is to be noted that, the viewpoint of the process result image is the same as the viewpoint of the facet image E1 in FIG. 18. Therefore, the disparity DP1 between the pixels showing the object obj1 in the facet image E1 and the viewpoint of the process result image is (0, 0).

As for the facet images E1, E2, and E5, pixel shift is performed on the facet images E1, E2, and E5 in accordance with the disparities DP1, DP2, and DP5, and the facet images E1, E2, and E5 subjected to the pixel shift are integrated. This makes it possible to obtain the process result image in which the object obj1 is brought into focus.

In other words, the pixel shift is performed on the facet images E1, E2, and E5 to cancel the respective disparities DP1, DP2, and DP5 (the pixel shift is performed in the opposite directions from the disparities DP1, DP2, and DP5). As a result, the positions of the pixels showing the object obj1 become identical among the facet images E1, E2, and E5 subjected to the pixel shift.

Therefore, it is possible to obtain the process result image in which the object obj1 is brought into focus, by integrating the facet images E1, E2, and E5 subjected to the pixel shift.

It is to be noted that, among the facet images E1, E2, and E5 subjected to the pixel shift, positions of pixels showing the object obj2 located at different positions from the object obj1 in the depth direction are not identical. Therefore, the object obj2 shown in the process result image is blurry.

Furthermore, because the viewpoint of the process result image is the viewpoint of the facet image E1 and the disparity DP1 is (0, 0) as described above, it is not substantially necessary to perform the pixel shift on the facet image E1 here.

In the light collection process performed by the light collection processor 83, for example, the pixels of viewpoint images of the plurality of viewpoints are subjected to the pixel shift to cancel the disparities between the focus target pixels showing the focus target and the viewpoint of the process result image (here, the viewpoint of the facet image E1). Subsequently, the pixels subjected to the pixel shift are integrated as described above. Thus, the image in which the focus target is refocused is obtained as the process result image.

### <Disparity Conversion>

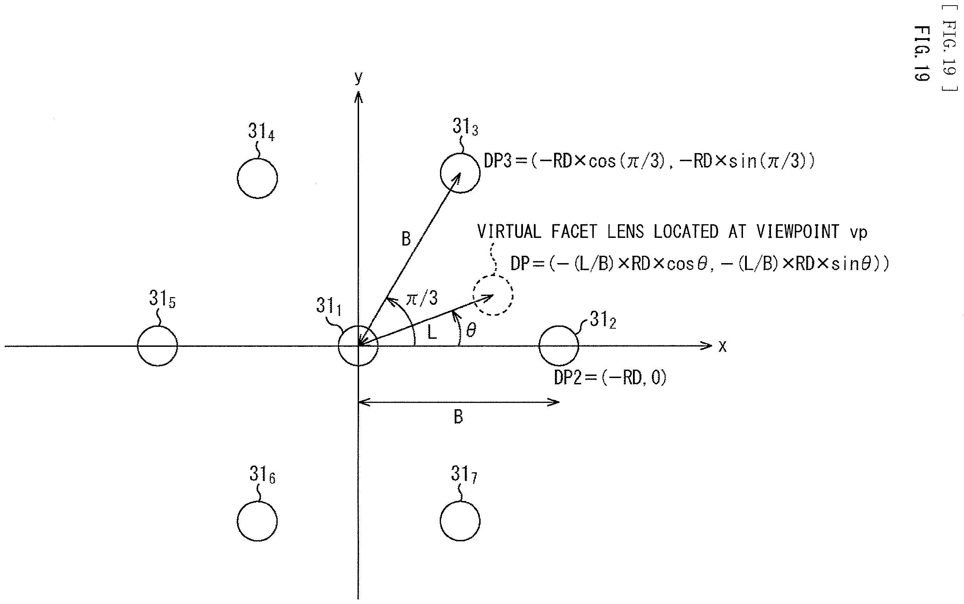

FIG. 19 is a diagram for describing an example of disparity conversion.

As described above with reference to FIG. 17, the registration disparities registered on the disparity map are identical to the x components of the disparities between the pixels of the facet image E1 and the respective pixels of the facet image E5 of the viewpoint that is on the left side of the facet image E1, outside a region with occlusion.

In the refocusing, it is necessary to perform the pixel shift on the viewpoint images to cancel the disparities of the focus target pixels.

Here, when attention is paid to a certain viewpoint as the viewpoint of interest, disparities of the focus target pixels between the viewpoint image of the viewpoint of interest and the process result image, that is, disparities of the focus target pixels between, for example, the viewpoint image of the viewpoint of interest and the facet image E1 are necessary for the pixel shift of the viewpoint image of the viewpoint of interest in the refocusing.

It is possible to determine the disparities of the focus target pixels between the viewpoint image of the viewpoint of interest and the facet image E1, from the registered disparities of the focus target pixels of the facet image E1 (the corresponding pixels in the facet image E1 corresponding to the focus target pixels in the process result image), while taking into account a direction from the viewpoint of the process result image to the viewpoint of interest.

Here, the direction to the viewpoint of interest from the viewpoint of the facet image E1, which is the viewpoint of the process result image, is indicated by a counterclockwise angle with 0 radian about the x axis.

For example, the facet lens 312 is located at a distance corresponding to the reference baseline length B in a +x direction from the viewpoint of the facet image E1, which is the viewpoint of the process result image. In addition, a direction from the viewpoint of the facet image E1, which is the viewpoint of the process result image, to the viewpoint of the facet image E2 corresponding to the facet lens 31₂ is 0 radian. In this case, (a vector serving as) the disparity DP2 of the focus target pixels between the facet image E1 and the facet image E2 (the viewpoint image) corresponding to the facet lens 31₂ is determined as, (-RD, 0) = (-(B/B) × RD × cos0, -(B/B) × RD × sin0), on the basis of the registered disparity RD of the focus target pixels, while taking into account 0 radian, which is the direction of the viewpoint of the facet image E2 corresponding to the facet lens 31₂.

In addition, for example, the facet lens 313 is located at a distance corresponding to the reference baseline length B in a π/3 direction from the viewpoint of the facet image E1, which is the viewpoint of the process result image. In addition, a direction from the viewpoint of the facet image E1, which is the viewpoint of the process result image, to the viewpoint of the facet image E3 corresponding to the facet lens 31₃ is π/3 radians. In this case, the disparity DP3 of the focus target pixels between the facet image E1 and the facet image E3 corresponding to the facet lens 31₃ is determined as, (-RD × cos(π/3), -RD × sin(π/3)) = (-(B/B) × RD × cos(π/3), -(B/B) × RD × sin(π/3)), on the basis of the registered disparity RD of the focus target pixels, while taking into account π/3 radians, which is the direction of the viewpoint of the facet lens 31₃.

Here, it is possible to regard an interpolation image obtained by the interpolator 82 as an image captured by a virtual lens located at a viewpoint vp of the interpolation image. The viewpoint vp of the image captured by the virtual lens is assumed to be located at a distance L in a direction of an angle θ (radian) from the viewpoint of the facet image E1, which is the viewpoint of the process result image. In this case, a disparity DP of focus target pixels between the facet image E1 and the viewpoint image of the viewpoint vp (the image captured by the virtual lens) is determined as, (-(L/B) × RD × cosθ, -(L/B) × RD × sinθ), on the basis of the registered disparity RD of the focus target pixels, while taking into account the angle θ, which is the direction of the viewpoint vp.

Determining the disparity of pixels between the facet image E1 and the viewpoint image of the viewpoint of interest on the basis of a registered disparity RD while taking into account the direction of the viewpoint of interest as described above, that is, converting the registered disparity RD into the disparity of the pixels between the facet image E1 (the process result image) and the viewpoint image of the viewpoint of interest, is also referred to as the disparity conversion.

In the refocusing, the disparities of the focus target pixels between the facet image E1 and the viewpoint images of respective viewpoints are determined on the basis of the registered disparities RD regarding the focus target pixels through the disparity conversion, and the pixel shift is performed on the viewpoint images of the respective viewpoints to cancel the disparities of the focus target pixels.

In the refocusing, the pixel shift is performed on the viewpoint images to cancel the disparities of the focus target pixels between the viewpoint images. Shift amounts of this pixel shift are also referred to as focus shift amounts.

Here, a viewpoint of an i-th viewpoint image among the viewpoint images of the plurality of viewpoints obtained by the interpolator 82 is also referred to as a viewpoint vp#i, in the description below. The focus shift amount of the viewpoint image of the viewpoint vp#i is also referred to as a focus shift amount SV#i.

It is possible to uniquely determine the focus shift amount SV#i of the viewpoint image of the viewpoint vp#i, on the basis of the registered disparity RD of the focus target pixels through the disparity conversion while taking into account a direction to the viewpoint vp#i from the viewpoint of the facet image E1, which is the viewpoint of the process result image.

Here, in the disparity conversion, it is possible to determine (a vector serving as) a disparity (-(L/B) × RD × cosθ, -(L/B) × RD × sinθ), on the basis of the registered disparity RD, as described above.

Accordingly, it is possible to regard the disparity conversion as arithmetic operation of multiplying the registered disparity RD by each of -(L/B) × cosθ and -(L/B) × sinθ, arithmetic operation of multiplying the registered disparity RD × -1 by each of (L/B) × cosθ and (L/B) × sinθ, or the like, for example.

Here, the disparity conversion is regarded as the arithmetic operation of multiplying the registered disparity RD × -1 by each of (L/B) × cosθ and (L/B) × sinθ, for example.

In this case, a value to be subjected to the disparity conversion, which is the registered disparity RD ×- 1 here, is a criteria value for determining the focus shift amounts of the viewpoint images of the respective viewpoints, and is hereinafter also referred to as the reference shift amount BV.

The focus shift amount is uniquely decided through the disparity conversion of the reference shift amount BV. Accordingly, the pixel shift amounts for performing the pixel shift on the pixels of the viewpoint images of the respective viewpoints in the refocusing are substantially set depending on the setting of the reference shift amount BV.

It is to be noted that, in a case where the registered disparity RD × -1 is adopted as the reference shift amount BV as described above, the reference shift amount BV used for focusing on the focus target pixels, which is the registered disparity RD of the focus target pixels × -1, is equal to the x component of the disparity of the focus target pixels with respect to the facet image E2.

### <Light Collection Process for Refocusing>

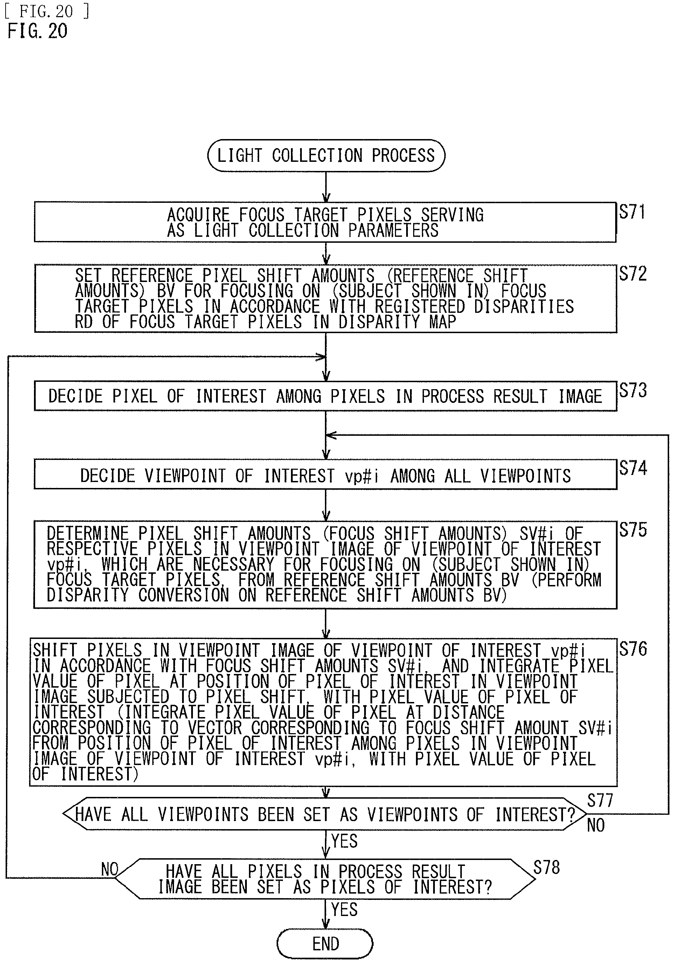

FIG. 20 is a flowchart for describing an example of the light collection process for the refocusing.

In Step S71, the light collection processor 83 acquires (information regarding) the focus target pixels serving as the light collection parameters from the parameter setting section 84, and the process proceeds to Step S72.

In other words, for example, the facet image E1 or the like among the facet images E1 to E7 corresponding to the facet lenses 31₁ to 31₇ is displayed on the display 54. When a user designates a position in the facet image E1, the parameter setting section 84 sets pixels at the position designated by the user as the focus target pixels, and supplies the light collection processor 83 with (information indicating) the focus target pixels as a light collection parameter.

In step S71, the light collection processor 83 acquires the focus target pixels supplied from the parameter setting section 84 as described above.

In step S72, the light collection processor 83 acquires the registered disparities RD of the focus target pixels registered in the disparity map supplied from the parallax information generator 81. The light collection processor 83 then sets the reference shift amounts BV in accordance with the registered disparities RD of the focus target pixels. In other words, the light collection processor 83 sets the registered disparities RD of the focus target pixels × -1 as the reference shift amounts BV, for example. Next, the process proceeds from Step S72 to Step S73.

In step S73, the light collection processor 83 sets, as a process result image, an image corresponding to one of the viewpoint images of the plurality of viewpoints supplied from the interpolator 82, such as an image corresponding to the facet image E1, that is, an image that has the same size as the facet image E1 when viewed from the viewpoint of the facet image E1, and that has initial values of 0 as the pixel values. In addition, the light collection processor 83 decides, as a pixel of interest, one of pixels that have not been decided as the pixel of interest among pixels in the process target image. Next, the process proceeds from Step S73 to Step S74.

In step S74, the light collection processor 83 decides, as the viewpoint of interest vp#i, a viewpoint vp#i that has not been decided as the viewpoint of interest (with respect to the pixel of interest) among the viewpoints of the viewpoint images supplied from the interpolator 82. Next, the process proceeds to Step S75.

In step S75, the light collection processor 83 determines the focus shift amounts SV#i of respective pixels in the viewpoint image of the viewpoint of interest vp#i, from the reference shift amounts BV. The focus shift amounts SV#i are necessary for focusing on the focus target pixels (for putting a focus on a subject shown in the focus target pixels).

In other words, the light collection processor 83 performs the disparity conversion on the reference shift amounts BV while taking into account a direction to the viewpoint of interest vp#i from the viewpoint of the facet image E1, which is the viewpoint of the process result image, and acquires the values (vectors) obtained as a result of the disparity conversion as the focus shift amounts SV#i of the respective pixels of the viewpoint image of the viewpoint of interest vp#i.

After that, the process proceeds from Step S75 to Step S76. The light collection processor 83 then performs the pixel shift on the respective pixels in the viewpoint image of the viewpoint of interest vp#i in accordance with the focus shift amounts SV#i, and integrates the pixel value of the pixel at the position of the pixel of interest in the viewpoint image subjected to the pixel shift, with a pixel value of the pixel of interest.

In other words, the light collection processor 83 integrates the pixel value of the pixel at a distance corresponding to the vector (for example, the focus shift amount SV#i × -1 in this case) corresponding to the focus shift amount SV#i from the position of the pixel of interest among the pixels in the viewpoint image of the viewpoint of interest vp#i, with the pixel value of the pixel of interest.

Next, the process proceeds from Step S76 to Step S77, and the light collection processor 83 determines whether all the viewpoints of the viewpoint images supplied from the interpolator 82 have been set as the viewpoint of interest.

In a case where it is determined in step S77 that not all the viewpoints of the viewpoint images supplied from the interpolator 82 have been set as the viewpoint of interest, the process returns to Step S74, and similar processes are repeated thereafter.

Alternatively, in a case where it is determined in step S77 that all the viewpoints of the viewpoint images supplied from the interpolator 82 have been set as the viewpoints of interest, the process proceeds to Step S78.

In step S78, the light collection processor 83 determines whether all of the pixels in the process result image have been set as the pixels of interest.

In a case where it is determined in step S78 that not all of the pixels in the process result image have been set as the pixel of interest, the process returns to step S73, and the light collection processor 83 newly decides, as the pixel of interest, one of the pixels that have not been decided as the pixel of interest among the pixels in the process result image, as described above. After that, a process similar to the above is repeated.

Alternatively, in a case where it is determined in step S78 that all the pixels in the process result image have been set as the pixels of interest, the light collection processor 83 outputs the process result image, and ends the light collection process.

It is to be noted that, in the light collection process illustrated in FIG. 20, a plane in which the distance in the depth direction in the real space is constant (does not vary) is set as an in-focus plane, and a process result image focused on a subject located on the in-focus plane (or in the vicinity of the in-focus plane) is generated by using the viewpoint images of the plurality of viewpoints.

In the light collection process illustrated in FIG. 20, the reference shift amounts BV are set in accordance with the registered disparities RD of the respective focus target pixels, but do not vary in accordance with the pixels of interest or the viewpoint of interest vp#i. Therefore, in the light collection process illustrated in FIG. 20, the reference shift amounts BV are set regardless of the pixels of interest or the viewpoint of interest vp#i.

In addition, the focus shift amounts SV#i vary with the viewpoint of interest vp#i and the reference shift amount BV. However, as described above, the reference shift amounts BV do not vary in accordance with the pixels of interest or the viewpoint of interest vp#i in the light collection process illustrated in FIG. 20. Accordingly, the focus shift amounts SV#i vary with the viewpoint of interest vp#i, but do not vary with the pixel of interest. In other words, the focus shift amounts SV#i are the same value for respective pixels in a viewpoint image of one viewpoint, regardless of the pixel of interest.

In FIG. 20, the process in step S75 for determining the focus shift amounts SV#i forms a loop (the loop from step S73 to step S78) of repeatedly calculating the focus shift amounts SV#i for the same viewpoint vp#i regarding different pixels of interest. However, as described above, the focus shift amounts SV#i are the same value for the respective pixels of the viewpoint image of one viewpoint, regardless of the pixel of interest.

Therefore, in FIG. 20, it is sufficient to perform the process in step S75 for determining the focus shift amounts SV#i only once for one viewpoint.

### <Acquisition of Region Information by using Server>

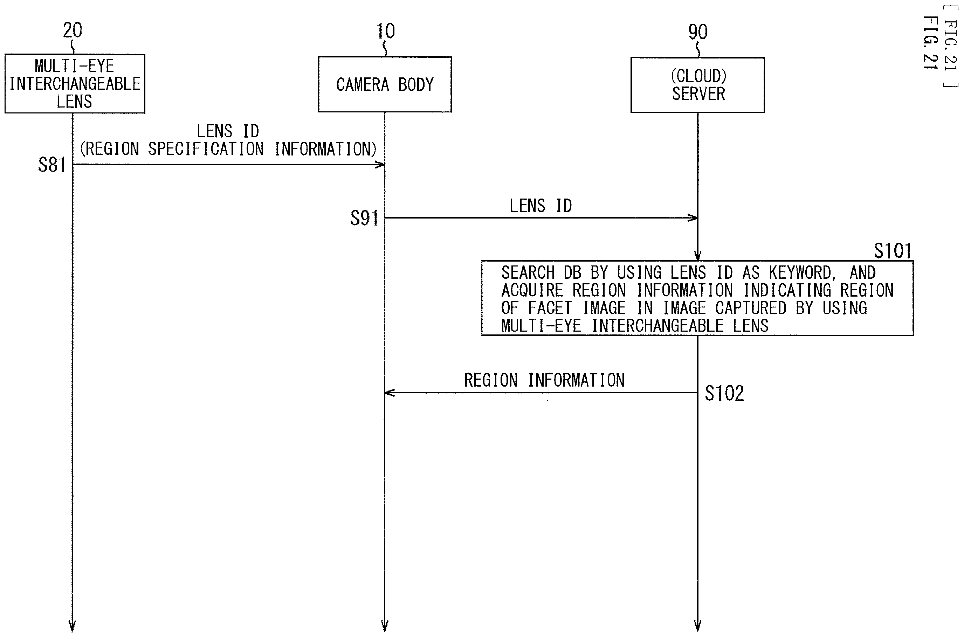

FIG. 21 is a diagram for describing an example of a process of acquiring region information that indicates a region of a facet image by using a server.

Note that, in FIG. 21, it is assumed that the lens IDs of the multi-eye interchangeable lenses 20 are adopted as the region specification information, and a database is prepared in which lens IDs are associated with pieces of region information regarding multi-eye interchangeable lenses 20 specified on the basis of the lens IDs.

For example, when the multi-eye interchangeable lens 20 is mounted on the camera body 10, the communication section 42 of the multi-eye interchangeable lens 20 (FIG. 3) transmits the lens ID to the camera body 10 as the region specification information stored in the storage 41, in Step S81.

The communication section 57 of the camera body 10 (FIG. 3) receives the lens ID of the multi-eye interchangeable lens 20, and transmits the lens ID to, for example, a server 90 on a cloud in Step S91.

The server 90 receives the lens ID from the camera body 10, searches the database (DB) by using the lens ID as a keyword, and acquires region information indicating the region of the facet image in the image captured by using the multi-eye interchangeable lens 20 specified on the basis of the lens ID, in Step S101.

Next, in Step S102, the server 90 transmits the region information searched from the database, to the camera body 10.

The communication section 57 of the camera body 10 (FIG. 3) receives the region information from the server 90 and supplies the region information to the region specification section 52. The region specification section 52 specifies a region indicated by the region information supplied from the server 90 as the region of the facet image in the captured image, and extracts the facet image from the captured image.

It is to be noted that, in FIG. 21, the lens ID is transmitted from the multi-eye interchangeable lens 20 to the server 90 via the camera body 10. However, it is also possible to (directly) transmit the lens ID from the multi-eye interchangeable lens 20 to the server 90 without passing through the camera body 10.

In addition, it is also possible for the camera body 10 to transmit the captured image to the server 90 together with the lens ID. In this case, it is possible for the server 90 to extract the facet image from the image captured by the camera body 10 in accordance with the region information obtained through the searching that uses the lens ID as the keyword, and transmit the extracted facet image to the camera body 10.

In addition, it is possible to configure the camera body 10 that does not include the image processor 53, and it is also possible for the camera body 10 to transmit the captured image or the facet image to the server 90. In this case, it is possible for the server 90 to extract the facet image from the captured image as necessary, and performs image processing similar to the image processing performed by the image processor 53 by using the facet image extracted from the captured image or the facet image transmitted from the camera body 10. Next, it is possible for the server 90 to transmit a process result image obtained through the image processing, to the camera body 10 or the like.

### <Specific Example of Exposure Control>

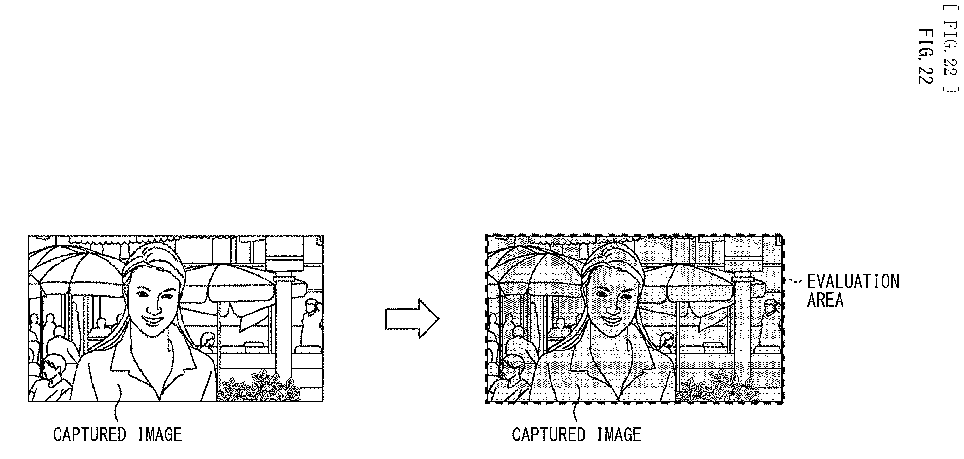

FIG. 22 is a diagram for describing details of the exposure control.

It is to be noted that, hereinafter, the camera system that controls exposure is assumed to be a single lens camera system, for ease of explanation.

In AE exposure control, an evaluation area, which is an area to be used for calculating a brightness evaluation value, is set in the captured image as illustrated in FIG. 22. In FIG. 22, the evaluation area is set to the whole captured image.

After the evaluation area is set, an integrated value of Y signals (luminance signals) of pixels in the evaluation area in the captured image is calculated as the brightness evaluation value. Subsequently, exposure time, the diaphragm, and gain are controlled in accordance with the brightness evaluation value and a preset goal value of the brightness evaluation value.

For example, in a case where the brightness evaluation value is two million and the goal value is one million, the exposure time, the diaphragm, and the gain are controlled in a manner that the brightness evaluation value becomes 1/2 (= one million / two million) of the current value.

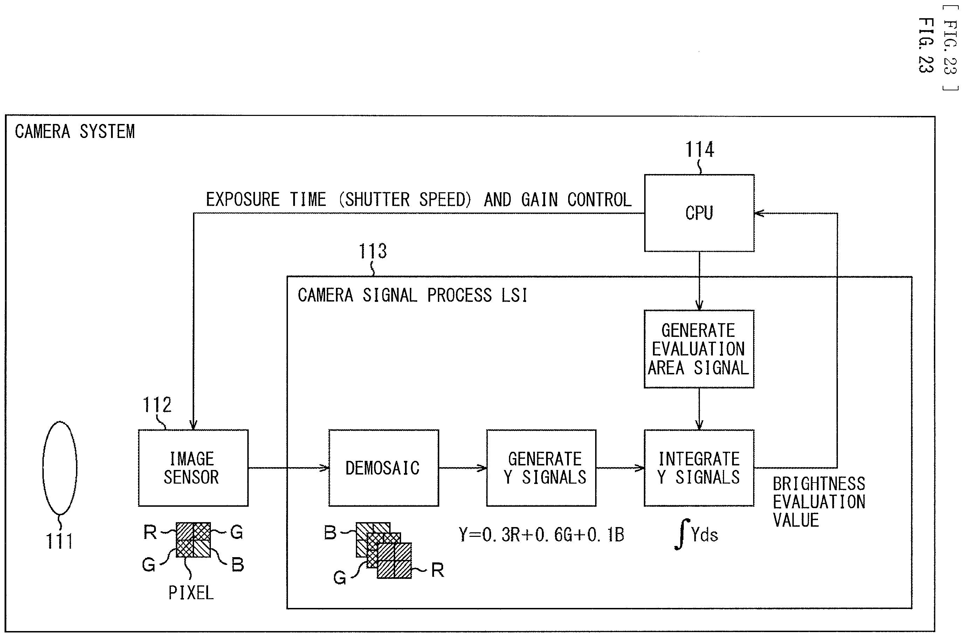

FIG. 23 is a block diagram illustrating a configuration example of a camera system having an AE function.

In FIG. 23, the camera system includes a lens 111, an image sensor 112, camera signal process large-scale integration (LSI) 113, and a central processing unit (CPU) 114.

The lens 111 collects light from a subject on the image sensor 112.

The image sensor 112 performs photoelectric conversion on the light passed through the lens 111, and outputs an image captured as a result of the photoelectric conversion, to the camera signal process LSI 113. The image sensor 112 includes a color filter with a Bayer arrangement, for example. Each of pixels in the captured image outputted from the image sensor 112 includes only any one of a red (R) signal, a green (G) signal, and a blue (B) signal as a pixel value in accordance with the position of the pixel.

The camera signal process LSI 113 demosaics (interpolates) the image captured by the image sensor 112, and generates the captured image in which the pixels have respective pixel values of the R signal, the G signal, or the B signal (the captured image includes respective planes of the R signal, the G signal, and the B signal).

In addition, the camera signal process LSI 113 generates Y signals (luminance signals) of the respective pixels in the captured image by using the demosaiced captured image, the R signal, the G signal, and the B signal in accordance with an expression Y = 0.3 R + 0.6 G + 0.1 B or the like, for example.

In contrast, the CPU 114 sets the evaluation area, and instructs the camera signal process LSI 113 to generate an evaluation area signal indicating the evaluation area. The camera signal process LSI 113 follows the instruction from the CPU 114 and generates the evaluation area signal indicating the evaluation area. In addition, the camera signal process LSI 113 determines the brightness evaluation value by integrating (performing integration of) Y signals of pixels in the evaluation area (S) in the captured image indicated by the evaluation area signal, and supplies the brightness evaluation value to the CPU 114.

The CPU 114 calculates a combination of gain and exposure time (shutter speed) of the image sensor 112, for example, in accordance with the brightness evaluation value supplied from the camera signal process LSI 113 and the preset goal value, in a manner that the brightness evaluation value becomes identical to the goal value.

Here, it is possible to determine the Y signals of the captured image as (values proportional to) a product of luminance of the subject, the exposure time of the image sensor 112, and the gain. The number of the combinations of the exposure time and the gain for matching the brightness evaluation value, which is the integrated value of the Y signals, and the goal value is infinite. The CPU 114 selects a combination of exposure time and gain, which is estimated to be appropriate to a situation, from among the infinite number of combinations of the exposure time and the gain.

Next, the CPU 114 sets the combination of exposure time and gain, which is estimated to be appropriate, in the image sensor 112. This controls exposure, that is, the exposure time and the gain, and achieves the AE.

It is also possible for the controller 56 (FIG. 3) to perform an exposure control process in a way similar to the camera system illustrated in FIG. 23.

### <Description of Computer to which Present Technology is Applied>

Next, it is possible to perform the above described series of processes performed by the region specification section 52, the image processor 53, the controller 56, the communication section 57, and the like with hardware or software. In a case where the series of processes are performed with software, a program that forms the software is installed into a general-purpose computer or the like.

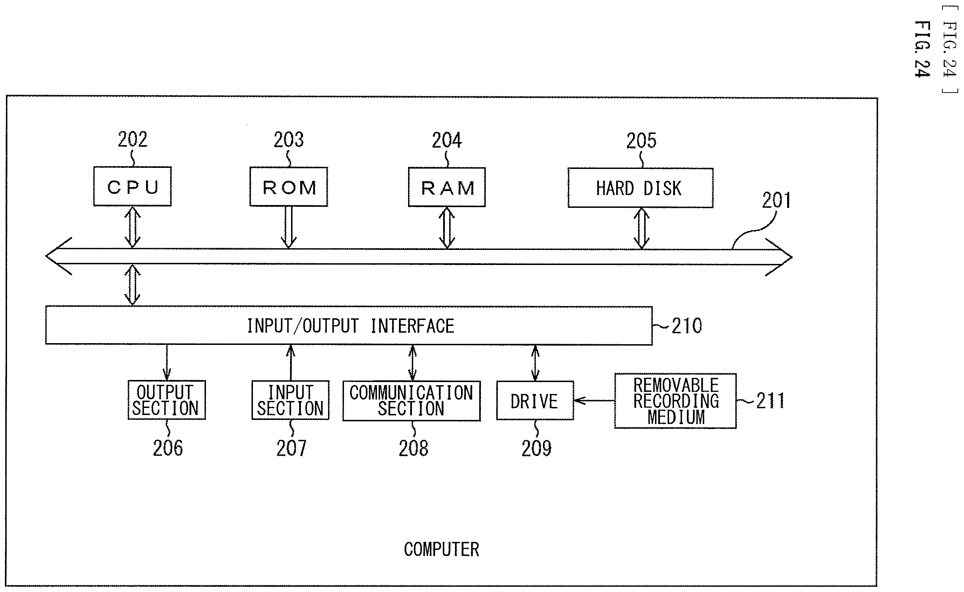

FIG. 24 is a block diagram illustrating a configuration example of an embodiment of a computer into which the program for performing the above described series of processes is installed.

It is possible to record the program in advance in a hard disk 205 or ROM 203 provided as a recording medium built in the computer.

Alternatively, it is possible to store (record) the program in a removable recording medium 211. Such a removable recording medium 211 may be provided as so-called packaged software. Here, the removable recording medium 211 may be a flexible disk, a compact disc read only memory (CD-ROM), a magneto-optical (MO) disk, a digital versatile disc (DVD), a magnetic disk, semiconductor memory, or the like, for example.

Note that, it is possible to install the program into the computer from the above described removable recording medium 211. Alternatively, it is also possible to download the program into the computer via a communication network or a broadcasting network and install the program into the internal hard disk 205. In other words, it is possible to wirelessly transfer the program from a download site, for example, to the computer via an artificial satellite for digital satellite broadcasting, or it is possible to transfer the program by a cable to the computer via a network such as a local area network (LAN) or the Internet.

The computer includes a central processing unit (CPU) 202, and an input/output interface 210 is coupled to the CPU 202 via a bus 201.

When an instruction is inputted by a user operating an input section 207 or the like via the input/output interface 210, the CPU 202 executes the program stored in the read only memory (ROM) 203 in accordance with the instruction. Alternatively, the CPU 202 loads the program stored in the hard disk 205 into random access memory (RAM) 204, and executes the program.

By doing so, the CPU 202 performs the processes according to the above described flowcharts, or performs the processes by using the above-described structural elements illustrated in the block diagrams. The CPU 202 then outputs a result of the process from an output section 206 or transmit the result of the process from a communication section 208 via the input/output interface 210, for example, and records the result of the process on the hard disk 205, as necessary.

Note that the input section 207 is implemented by a keyboard, a mouse, a microphone, or the like. Meanwhile, the output section 206 is implemented by a liquid crystal display (LCD), a speaker, or the like.

Here, in the present specification, processes executed by the computer in accordance with the program may not necessarily be executed chronologically in the order described as a flowchart. In other words, the processes executed by the computer in accordance with the program also include processes executed in parallel or individually (for example, parallel processes or processes by objects).

Also, the program may be executed by a single computer (processor), or may be executed in a distributive manner by a plurality of computers. Further, the program may be transferred to a remote computer, and be executed therein.

Further, in this specification, the system means an assembly of a plurality of structural elements (apparatuses, modules (parts), and the like), and not all the structural elements have to be provided in the same housing. In view of this, a plurality of apparatuses that are housed in different housings and are coupled to one another via a network is a system, and a single apparatus including a plurality of modules housed in a single housing is also a system.

It should be noted that the embodiments of the present technology are not limited to those described above but may be modified in various ways without departing from the scope of the present technology.

For example, the present technology may take a cloud computing configuration in which a plurality of apparatuses shares a function via a network and collaborate in performing a process.

Further, the respective steps described with reference to the above described flowcharts may be carried out by a single apparatus or may be shared among a plurality of apparatuses and carried out by the plurality of apparatuses.

In addition, in a case where a plurality of processes is included in one step, it is possible to execute the plurality of processes included in the one step by a single apparatus or by a plurality of apparatuses that shares the one step.

Also, the effects described herein are only for illustrative purposes and there may be other effects.

It is to be noted that the present technology may also have the following configurations.
<1> An information processing apparatus including:
   a communication section that receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
   a region specification section that specifies the regions of the plurality of facet images respectively corresponding to the plurality of facet lenses in the captured image, on a basis of the region specification information.
<2> The information processing apparatus according to < 1 >, in which the facet image corresponding to the facet lens is an image that includes, within a picture formed of a light beam collected through the facet lens, only a portion that does not overlap another picture formed of a light beam collected through another facet lens.
<3> The information processing apparatus according to < 1 >, further including
   a controller that controls exposure by using some or all of the plurality of facet images.
<4> The information processing apparatus according to any of <1> to <3>, further including
   a display that displays the captured image or the facet image.
<5> The information processing apparatus according to any of <1> to <4>, further including
   a light collection processor that performs a light collection process of shifting pixels in viewpoint images of a plurality of viewpoints including the plurality of facet images, integrating the shifted pixels, and generating a process result image that focuses on an in-focus point at a predetermined distance in a depth direction.
<6> The information processing apparatus according to <5>, in which the light collection processor sets shift amounts by which the pixels are shifted in the viewpoint images, in accordance with parallax information regarding the viewpoint images of the plurality of viewpoints.
<7> The information processing apparatus according to <5> or <6>, in which the viewpoint images of the plurality of viewpoints include the plurality of facet images and a plurality of interpolation images generated through interpolation using the plurality of facet images.
<8> The information processing apparatus according to <7>, further including:
   a parallax information generator that generates parallax information regarding the plurality of facet images; and
   an interpolator that generates the plurality of interpolation images of different viewpoints by using the facet images and the parallax information.
<9> An information processing method performed by an information processing apparatus, the method including:
   receiving region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
   specifying the regions of the plurality of facet images respectively corresponding to the plurality of facet lenses in the captured image, on a basis of the region specification information.
<10> A program that causes a computer to function as:
   a communication section that receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
   a region specification section that specifies the regions of the plurality of facet images respectively corresponding to the plurality of facet lenses in the captured image, on a basis of the region specification information.
<11> An interchangeable lens including:
   a plurality of facet lenses disposed in a manner that the plurality of facet lenses does not overlap each other in an optical axis direction;
   a storage that stores region specification information for specifying respective regions of a plurality of facet images corresponding to pictures formed of respective light beams collected through the plurality of facet lenses, the respective regions being included in an image captured by one image sensor in a case where the interchangeable lens is mounted on a camera body including the image sensor; and
   a communication section that transmits the region specification information to an outside.
<12> The interchangeable lens according to <11>, further including
   a diaphragm that limits, with respect to each of the plurality of facet lenses, respective light beams reaching the image sensor from the plurality of facet lenses.
<13> The interchangeable lens according to <12>, in which the diaphragm has apertures that limit light beams from the facet lenses in a manner that a light beam collected through one of the plurality of facet lenses does not overlap a light beam collected through another one of the plurality of facet lenses.
<14> The interchangeable lens according to any of <11> to <13>, in which the region specification information indicates diameters of respective effective image circles of the plurality of facet lenses, and center positions of the effective image circles.
<15> The interchangeable lens according to any of <11> to <13>, in which the region specification information includes region information indicating regions of the respective facet images corresponding to the plurality of facet lenses in the captured image.

### Reference Signs List

10: camera body
11: camera mount
20: multi-eye interchangeable lens
21: lens barrel
22: lens mount
23: lens hood
31₁ to 31₇: facet lens
41: storage
42: communication section
51: image sensor
52: region specification section
53: image processor
54: display
55: storage
56: controller
57: communication section
71: diaphragm
81: parallax information generator
82: interpolator
83: light collection processor
84: parameter setting section
90: server
201: bus
202: CPU
203: ROM
204: RAM
205: hard disk
206: output section
207: input section
208: communication section
209: drive
210: input/output interface
211: removable recording medium

## Claims

1. An information processing apparatus comprising:
a communication section that receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
a region specification section that specifies the regions of the plurality of facet images respectively corresponding to the plurality of facet lenses in the captured image, on a basis of the region specification information.

2. The information processing apparatus according to claim 1, wherein the facet image corresponding to the facet lens is an image that includes, within a picture formed of a light beam collected through the facet lens, only a portion that does not overlap another picture formed of a light beam collected through another facet lens.

3. The information processing apparatus according to claim 1, further comprising
a controller that controls exposure by using some or all of the plurality of facet images.

4. The information processing apparatus according to claim 1, further comprising
a display that displays the captured image or the facet image.

5. The information processing apparatus according to claim 1, further comprising
a light collection processor that performs a light collection process of shifting pixels in viewpoint images of a plurality of viewpoints including the plurality of facet images, integrating the shifted pixels, and generating a process result image that focuses on an in-focus point at a predetermined distance in a depth direction.

6. The information processing apparatus according to claim 5, wherein the light collection processor sets shift amounts by which the pixels are shifted in the viewpoint images, in accordance with parallax information regarding the viewpoint images of the plurality of viewpoints.

7. The information processing apparatus according to claim 5, wherein the viewpoint images of the plurality of viewpoints include the plurality of facet images and a plurality of interpolation images generated through interpolation using the plurality of facet images.

8. The information processing apparatus according to claim 7, further comprising:
a parallax information generator that generates parallax information regarding the plurality of facet images; and
an interpolator that generates the plurality of interpolation images of different viewpoints by using the facet images and the parallax information.

9. An information processing method performed by an information processing apparatus, the method comprising:
receiving region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
specifying the regions of the plurality of facet images respectively corresponding to the plurality of facet lenses in the captured image, on a basis of the region specification information.

10. A program that causes a computer to function as:
a communication section that receives region specification information for specifying respective regions of a plurality of facet images corresponding to pictures formed of respective light beams collected through a plurality of facet lenses, the respective regions being included in an image captured by one image sensor in a case where a camera body including the image sensor is equipped with an interchangeable lens including the plurality of facet lenses disposed in a manner that the plurality of facet lenses does not overlap each other in an optical axis direction; and
a region specification section that specifies the regions of the plurality of facet images respectively corresponding to the plurality of facet lenses in the captured image, on a basis of the region specification information.

11. An interchangeable lens comprising:
a plurality of facet lenses disposed in a manner that the plurality of facet lenses does not overlap each other in an optical axis direction;
a storage that stores region specification information for specifying respective regions of a plurality of facet images corresponding to pictures formed of respective light beams collected through the plurality of facet lenses, the respective regions being included in an image captured by one image sensor in a case where the interchangeable lens is mounted on a camera body including the image sensor; and
a communication section that transmits the region specification information to an outside.

12. The interchangeable lens according to claim 11, further comprising
a diaphragm that limits, with respect to each of the plurality of facet lenses, respective light beams reaching the image sensor from the plurality of facet lenses.

13. The interchangeable lens according to claim 12, wherein the diaphragm has apertures that limit light beams from the facet lenses in a manner that a light beam collected through one of the plurality of facet lenses does not overlap a light beam collected through another one of the plurality of facet lenses.

14. The interchangeable lens according to claim 11, wherein the region specification information indicates diameters of respective effective image circles of the plurality of facet lenses, and center positions of the effective image circles.

15. The interchangeable lens according to claim 11, wherein the region specification information comprises region information indicating regions of the respective facet images corresponding to the plurality of facet lenses in the captured image.
